(19) Europäisches Patentamt
European Patent Office
Office européen des brevets

(11) **EP 4 541 172 A2**

(12) **EUROPÄISCHE PATENTANMELDUNG**

(43) Veröffentlichungstag:
    **23.04.2025  Patentblatt 2025/17**

(21) Anmeldenummer: **25158495.9**

(22) Anmeldetag: **18.12.2018**

(51) Internationale Patentklassifikation (IPC):
    **A01C 7/20** (2006.01)

(52) Gemeinsame Patentklassifikation (CPC):
    **A01B 63/002; A01B 63/111; A01B 63/114;**
    **A01C 7/203; A01C 7/205;** A01C 5/064; A01C 7/081

(84) Benannte Vertragsstaaten:
    **AL AT BE BG CH CY CZ DE DK EE ES FI FR GB**
    **GR HR HU IE IS IT LI LT LU LV MC MK MT NL NO**
    **PL PT RO RS SE SI SK SM TR**

(30) Priorität: **23.12.2017  DE 102017223790**

(62) Dokumentnummer(n) der früheren Anmeldung(en)
    nach Art. 76 EPÜ:
    **18213748.9 / 3 501 248**

(71) Anmelder: **Horsch Maschinen GmbH**
    **92421 Schwandorf (DE)**

(72) Erfinder: **HORSCH, Philipp**
    **92421 Schwandorf (DE)**

(74) Vertreter: **Benninger Patentanwaltskanzlei**
    **Dr.-Leo-Ritter-Straße 5**
    **93049 Regensburg (DE)**

Bemerkungen:
    Diese Anmeldung ist am 18-02-2025 als
    Teilanmeldung zu der unter INID-Code 62 erwähnten
    Anmeldung eingereicht worden.

(54) **LANDWIRTSCHAFTLICHE MASCHINE ZUR BODENBEARBEITUNG UND/ODER AUSSAAT UND VERFAHREN ZUR REGELUNG DES AUFLAGEDRUCKS UND/ODER DER ARBEITSTIEFE VON LANDWIRTSCHAFTLICHEN ARBEITSWERKZEUGEN**

(57)     Es ist ein Regelungssystem für landwirtschaftliche Arbeitswerkzeuge (12), wie Säschare, Schneidscheiben, Walzen oder dergl., offenbart, wobei wenigstens zwei derartige Arbeitswerkzeuge (12) jeweils mittels elastischer Lagerelementen (26) schwenkbar an einem Träger (22) montiert sind, welcher Träger (22) mittels eines Aktors (34) schwenkbar an einem Lagerflansch (30) oder einem Rahmenelement (32) einer landwirtschaftlichen Maschine (10) montiert oder angebaut wird, wobei mittels des Aktors (34) die jeweilige Winkelposition des Trägers (22) in Bezug auf eine Ackerfläche variabel veränderbar ist, wodurch der Auflagedruck und/oder die Arbeitstiefe der Arbeitswerkzeuge (12) veränderbar ist, wobei zur Messung des Auflagedrucks und/oder der Arbeitstiefe zumindest einem Arbeitswerkzeug (12) und/oder dem Träger (22) ein Messmittel (38) zugeordnet ist. Um ein Regelungssystem zur Regelung des Auflagedrucks und/oder der Arbeitstiefe von landwirtschaftliche Arbeitswerkzeugen zu schaffen, bei welchem die Anzahl an Aktoren auf ein Mindestmaß reduziert und auf eine hydraulische oder fluide Koppelung zwischen den Arbeitswerkzeugen verzichtet werden kann, zudem aber ein Ausweichen der jeweiligen Arbeitswerkzeuge beim Auftreffen auf Hindernisse ermöglicht wird, ist vorgesehen, dass der Aktor (34) auf Basis des mittels des Messmittel (38) ermittelten Auflagedruck und/oder der ermittelten Arbeitstiefe und der Anzahl der an dem gemeinsamen Träger (22) montierten Arbeitswerkzeuge (12) angesteuert wird.

    Zudem ist ein Verfahren zur Regelung des Auflagedrucks und/oder der Arbeitstiefe von landwirtschaftlichen Arbeitswerkzeugen (12) offenbart.

Fig. 3B

**Beschreibung**

Die vorliegende Erfindung betrifft ein Regelungssystem für landwirtschaftliche Arbeitswerkzeuge wie Säschare, Schneidscheiben, Walzen oder dergl. gemäß den Merkmalen des unabhängigen Anspruchs 1, eine landwirtschaftliche Maschine zur Bodenbearbeitung und/oder Aussaat gemäß den Merkmalen des unabhängigen Anspruchs 12, sowie ein Verfahren zur Regelung eines Auflagedrucks und/oder einer Arbeitstiefe von landwirtschaftlichen Arbeitswerkzeugen gemäß den Merkmalen des unabhängigen Verfahrensanspruchs 14.

In der Landwirtschaft sind verschiedenste Maschinen mit an diesen angebrachten Arbeitswerkzeugen zur Bodenbearbeitung und/oder zur Aussaat bekannt, wie bspw. Säschare, Schneidscheiben, Zinken, Walzen oder dergl., mittels welchen jeweils eine Ackerfläche gelockert und/oder landwirtschaftliche Verteilgüter, wie Dünger und/oder Saatgut, in einer möglichst gleich bleibenden Arbeitstiefe ausgebracht bzw. abgelegt werden sollen. Eine konstante Arbeitstiefe kann unter anderem durch einen definierten Auflagedruck, mit welchem das jeweilige Arbeitswerkzeug über eine Ackerfläche bewegt wird bzw. mittels welchem das jeweilige Arbeitswerkzeug gegen eine Ackerfläche gedrückt wird, erreicht werden. Auch ist es zur Erreichung einer möglichst gleichbleibenden Arbeitstiefe bei der Aussaat erforderlich, dass das jeweilige Arbeitswerkzeug, bzw. das als Säschar ausgebildete Arbeitswerkzeug möglichst ruhig entlang der Ackerfläche geführt wird, was wiederum durch einen konstanten, insbesondere variabel definierbaren, Auflagedruck erreicht wird.

Um einen definierten Auflagedruck zu erreichen, sind aus dem Stand der Technik bereits verschiedene Systeme bekannt. So geht aus der EP 2 353 354 A1 bereits ein als Säschar ausgeführtes Arbeitswerkzeug hervor. Jedem Säschar ist zur Erzeugung eines Auflagedrucks, welcher Auflagedruck auch als Scharruck bezeichnet wird, ein separater als Hydraulikzylinder ausgeführter Aktor zugeordnet. Zur Erfassung des am Säschar vorhandenen Auflagedrucks sind zumindest einem Säschar, insbesondere jedoch mehreren Säscharen jeweils Messmittel zugeordnet. Auch könnte anstelle von mehreren Hydraulikzylindern ein sog. Querzylinder vorgesehen sein, in welchen zwischen dem Säschar und dem Querzylinder angeordnete Kolbenstangen münden, so dass wiederum der Auflagedruck jedes Säschar mittels jeweils eines Hydraulikzylinders erzeugt und verändert wird.

Die Hydraulikzylinder bzw. die Säschare sind vorzugsweise über einen Querzylinder verbunden. Die Hydraulikzylinder könnten aber auch derartig fluidisch miteinander verbunden werden, dass diese jeweils eine weitgehend gleiche Bewegung ausführen. Die Säschare bzw. die Arbeitswerkzeuge sind somit hydraulisch verbunden bzw. gekoppelt. Bei einer derartigen Ausführungsform mit einem Hydraulikzylinder je Arbeitswerkzeug werden jedoch eine Vielzahl von Hydraulikzylinder benötigt, bspw. bei einer landwirtschaftlichen Maschine mit einer Arbeitsbreite von 6 Meter und jeweils 15 Zentimeter Abstand zwischen den Arbeitswerkzeugen, 40 derartiger Hydraulikzylinder bzw. derartiger Kolbenstangen.

Es hat sich aber herausgestellt, dass eine derartig hohe Anzahl von Hydraulikzylinder nicht praxistauglich ist, da diese zum einen sehr kostenintensiv sind und zum anderen neigen diese dazu, insbesondere durch den in der Landwirtschaft üblichen Staub und Schmutz, undicht zu werden bzw. zu Leckagen neigen und somit häufig getauscht und gewartet werden müssen, um ein dauerhaft gewünschtes und gleichmäßiges Arbeitsergebnis zu erreichen. Zudem führen über eine Ackerfläche geführte Arbeitswerkzeuge in der Regel mitunter hochfrequente Vibrationen aus, welche wiederum nur bedingt von den Hydraulikzylindern entsprechend aufgenommen werden können, bzw. durch welche Vibrationen wiederum die Hydraulikzylinder undicht werden können.

Zudem werden die Arbeitswerkzeuge über Drehlager jeweils an einem Scharrahmen bzw. an einem Rahmenelement der landwirtschaftlichen Maschine gelagert, wobei wiederum derartige Drehlager wartungsintensiv und teuer sind. Insbesondere kann ein Verschleiß derartiger Drehlager dazu führen, dass die jeweiligen Arbeitswerkzeuge nicht mehr konstant in deren Arbeitstiefe geführt werden können. Wobei dieser Verschleiß nicht erfassbar ist.

Zudem werden zur Lagerung jedes Säschar sowohl ein Drehlager als auch ein Hydraulikzylinder benötigt was wiederum sehr teileintensiv und kostenintensiv ist.

Des Weiteren sollten nebeneinander angeordnete Säschare, um auch bei hohen auf einer Ackerfläche vorhandenen Ernterückständen eingesetzt werden zu können, in Fahrrichtung versetzt zueinander angeordnet werden, um somit einen sog. großen Durchgang zu ermöglichen. Hierbei ist es wiederum für einen konstanten Auflagedruck bzw. für eine konstante Ablagetiefe erforderlich, dass in die verschieden langen Säschare jeweils unterschiedliche Momente eingeleitet werden, um somit gleiche Auflagedrücke zu erreichen, was bei den aus dem Stand der Technik bekannt gewordenen Systemen ebenfalls nicht möglich ist.

Darüber hinaus sind durch die jeweils an jedem Säschar angeordneten Hydraulikzylinder die, für ein Säschar beim Auftreffen auf Hindernissen wie Steine oder dergl. benötigten Ausfederwege ebenso begrenzt, da diese durch die jeweiligen auf die Hydraulikzylinder wirkenden Kräfte entsprechend starr gestellt sind. Zwar könnte dem bspw. durch Verwendung von sog. Druckspeichern bzw. Gasdruckspeichern entgegen gewirkt werden. Jedoch sind auch derartige Druckspeicher wiederum teuer und benötigen zudem aufwendige Verschlauchungs- und Verbindungsleitungen. Auch kann es mitunter vorkommen, dass das in den Kolben der Hydraulikzylinder befindliche Öl diese beim Ausweichen bzw. beim Ausfedern des Säschar nicht schnell genug verlassen kann bzw. nicht schnell genug durch die Anschlussöffnung des Hydraulikzylinders abgeführt werden kann, wodurch im Hydraulikzylinder hohe Drücke entstehen können und somit ebenso die Hydraulikzylinder oder deren Kolbenstangen beschädigt werden können.

Durch die somit aus dem Stand der Technik bekannt gewordenen Systeme erfolgt jeweils eine direkte Krafteinleitung mittels eines bspw. als Hydraulikzylinder ausgeführten Aktors in ein Arbeitswerkzeug, wobei durch eine derartige direkte Krafteinleitung jeweils auch die Ausfedereigenschaften der Arbeitswerkzeuge negativ beeinflusst werden. Zudem wird durch eine derartige direkte Krafteinleitung, zwar in der Regel ein gewünschter Auflagedruck erreicht, eine Arbeitstiefe aber jeweils auch direkt bzw. unmittelbar mit verändert.

Der Erfindung liegt somit die Aufgabe zugrunde ein Regelungssystem zur Regelung des Auflagedrucks und/oder der Arbeitstiefe von landwirtschaftliche Arbeitswerkzeugen zu schaffen, bei welchem die Anzahl an Aktoren auf ein Mindestmaß reduziert und auf eine hydraulische oder fluide Koppelung zwischen den Arbeitswerkzeugen verzichtet werden kann, zudem aber ein Ausweichen der jeweiligen Arbeitswerkzeuge beim Auftreffen auf Hindernisse ermöglicht wird. Eine weitere Aufgabe der Erfindung wird darin gesehen ein Verfahren zur Regelung des Auflagedrucks und/oder der Arbeitstiefe von landwirtschaftlichen Arbeitswerkzeugen zur Verfügung zu stellen.

Diese Aufgaben der Erfindung werden durch ein Regelungssystem mit den Merkmalen im Anspruch 1, eine landwirtschaftliche Maschine zur Bodenbearbeitung und/oder zur Aussaat mit den Merkmalen im Anspruch 12 sowie durch ein Verfahren mit den Merkmalen im Anspruch 14 gelöst. Weiter vorteilhafte Ausgestaltungen und Weiterbildungen der Erfindung sind in den jeweiligen abhängigen Ansprüchen angegeben.

Es sei vorab darauf hingewiesen, dass das erfindungsgemäße Regelungssystem sowie das erfindungsgemäße Verfahren sowohl zur Regelung des Auflagedrucks als auch zur Regelung der Arbeitstiefe der Arbeitswerkzeuge verwendet werden können. Auch gilt es zu beachten, dass durch eine Veränderung des Auflagedrucks auch eine Veränderung der Arbeitstiefe hervorgerufen werden kann und umgekehrt. Darüber hinaus kann es zudem in Abhängigkeit der Arbeitswerkzeuge erforderlich sein, einen konstanten Auflagedruck oder eine konstante Arbeitstiefe oder beides zu erreichen. So kann bspw. bei einem als Säschar ausgeführten Arbeitswerkzeug eine konstante Arbeitstiefe erforderlich sein, welche konstante Arbeitstiefe jedoch auch einen ruhigen Lauf vorrausetzt, welcher ruhiger Lauf des Arbeitswerkzeugs jedoch insbesondere durch einen definierten weitgehend konstanten Auflagedruck erreicht wird. Wenn also im vorliegenden Dokument ein Beschreibungsteil sich auf die Regelung eines konstanten Auflagedrucks bezieht, so sind die hierbei beschriebenen Aspekte gleichermaßen auch auf die Regelung auf eine konstante Arbeitstiefe zu beziehen. Ebenso können sich alle nachfolgend beschriebenen Aspekte und Merkmale im Hinblick auf eine Regelung einer konstanten Arbeitstiefe ebenso auf eine Regelung eines konstanten Auflagedrucks beziehen. Zudem kann insbesondere das erfindungsgemäße Regelungssystem in einer landwirtschaftlichen Maschine zur Bodenbearbeitung und/oder zur Aussaat Verwendung finden, wobei in dieser Maschine auch das erfindungsgemäße Verfahren durchgeführt werden kann.

Zur Lösung der genannten Aufgaben schlägt die Erfindung ein Regelungssystem zur Regelung des Auflagedrucks und/oder der Arbeitstiefe von landwirtschaftlichen Arbeitswerkzeugen vor. Bei den Arbeitswerkzeugen kann es sich insbesondere um Werkzeuge und Komponenten zur Bodenbearbeitung und/oder zur Aussaat, wie bspw. um Säschare, Schneidscheiben, Walzen, Zinken oder dergleichen handeln. Zudem findet das Regelungssystem vorzugsweise bei landwirtschaftlichen Maschinen zur Bodenbearbeitung und/oder zur Aussaat Verwendung.

Um die Anzahl an benötigten bzw. vorhandenen Aktoren auf ein Minimum zu reduzieren, ist vorgesehen, dass jeweils wenigstens zwei, drei oder mehr Arbeitswerkzeuge in einen Abstand zueinander bzw. beabstandet zueinander an einem gemeinsamen Träger montiert sind, d. h. dass jeweils wenigstens zwei, drei oder mehr Arbeitswerkzeuge mittels des Trägers mechanisch verbunden bzw. gekoppelt werden.

So kann vorgesehen sein, dass bspw. vier Arbeitswerkzeuge oder sechs Arbeitswerkzeuge und ein gemeinsamer Träger eine Sektion bilden, welcher Sektion ein Aktor zur Beeinflussung des Auflagedrucks bzw. zur Variation der Arbeitstiefe zugeordnet ist. Durch den gemeinsamen Träger werden die jeweiligen Bewegungen dieses auf alle, an diesem angebrachten Arbeitswerkzeuge übertragen, ohne hierfür eine hydraulische oder fluide Koppelung zu benötigen. Dabei gilt zu beachten, dass in Abhängigkeit der Anzahl an Arbeitswerkzeugen jeweils die Größe des Aktors bzw. die durch diesen erzeugte Kraft entsprechend angepasst sein kann. Durch die erfindungsgemäße Koppelung der Arbeitswerkzeuge mittels eines Trägers kann somit keine direkte Krafteinleitung durch den Aktor in das Arbeitswerkzeug stattfinden.

Der gemeinsame Träger kann insbesondere durch ein Profilrohr oder ein Hohlprofil oder dergleichen ausgebildet sein. Auch kann der Träger bzw. kann die Koppelung mittels eines mechanischen Gestänges oder einer mechanischen Kinematik erfolgen, wobei im nachfolgenden auch derartige Ausführungen der Einfachheitshalber als Träger bezeichnet werden. Der Träger kann eine im Wesentlichen quadratische Kontur aufweisen. Jedoch wären auch zumindest abschnittweise zylindrische oder dreieckige oder dergleichen Konturen oder Querschnitte möglich.

Um zum einen eine kostengünstige und Wartungsfreie Aufhängung bzw. Lagerung der Arbeitswerkzeuge zu erreichen, sowie um auch bei hohen auf die Arbeitswerkzeuge wirkenden Auflagekräften noch ein Ausweichen bzw. ein Ausfedern dieser beim Auftreffen auf Hindernisse wie Steine oder dergl. zu ermöglichen, ist des Weiteren vorgesehen, dass diese mittels elastisch verformbaren Lagerelementen am gemeinsamen Träger montiert sind. Bei den elastisch verformbaren Lagerelementen kann es sich insbesondere um aus der Landtechnik bekannte Elastomerlager handeln, welche Elastomerlager auch als Gummilager oder Gummischnurlager bezeichnet bzw. ausgeführt werden können.

Insbesondere können die Lagerelemente derartig gewählt sein, dass diese auch Hochfrequente Vibrationen aufnehmen können, ohne hierbei beschädigt zu werden, oder ohne hierbei deren elastische Eigenschaften zu verlieren.

Zur Montage der Arbeitswerkzeuge am Träger können diese einen Lagerabschnitt, welcher beispielsweise die weitgehend gleiche Kontur als der Träger aufweist, besitzen, wobei jedoch dessen Querschnitt größer ist als der Querschnitt des Trägers. An dem Lagerabschnitt des Arbeitswerkzeugs kann insbesondere ein Rahmen anschließen, an welchen wiederum die jeweiligen Komponenten und Werkzeuge zur Bodenbearbeitung und/oder zur Aussaat angebracht werden. Der Lagerabschnitt kann in der Regel in einem Winkel zum Flanschrohr angeordnet sein, so dass sich zwischen dem Träger und dem Lagerabschnitt jeweils Freiräume ausbilden. In den sich dadurch ergebenden, parallel zum Träger erstreckenden Frei- bzw. Hohlräumen können je nach Querschnitt und Ausführung ein, zwei oder mehr elastische Lagerelemente eingelegt sein. So wäre es zudem denkbar, dass bzw. jeweils zumindest zwei Hohlräume mit einem gemeinsamen Lagerelement verbunden werden. Auch könnten die vier Hohlräume mit einem Lagerelement verbunden werden. Zudem wäre es denkbar, dass bspw. eine, zwei, drei oder vier oder mehr Hohlräume vorhanden sind.

Über die elastischen Lagerelemente ist somit das Arbeitswerkzeug radial schwenkbar mit dem Träger verbunden.

Das elastische Lagerelement könnte aber auch durch ein Drehlager ausgebildet sein, welches sich aus einem Gummilager und einer metallischen Buchse zusammensetzen kann. Auch eine sogenannte Silentbuchse könnte als Lagerelement verwendet werden. Zudem wäre es denkbar, dass jeweils ein Gummilager verwendet wird, dessen Innenkontur im Wesentlichen identisch zu der des Trägers ist sowie dass deren Außenkontur zumindest im Wesentlichen identisch zu der des Lagerabschnitts ist.

Mittels der elastischen Lagerelemente kann zudem erreicht werden, dass die Arbeitswerkzeuge, bspw. beim Auftreffen auf Hindernissen und Steinen unabhängig voneinander ausweichen können, während der Auflagedruck der restlichen, nicht ausweichenden Arbeitswerkzeuge hiervon aber weitgehend unverändert bleibt, was zudem durch die mechanische Koppelung mittels des Trägers noch weiter verbessert wird.

Die Lagerelemente können durch den Einbau zwischen dem Lagerabschnitt und dem Träger jeweils verformt und dadurch vorgespannt werden. Die Lagerelemente können somit eine Vorspannkraft erzeugen, d. h. die Schwenkbeweglichkeit der Arbeitswerkzeuge in Bezug auf den Träger wird hierbei durch die Vorspannkraft entsprechend beeinflusst, wobei diese Vorspannkraft von verschiedenen Faktoren beeinflusst wird, bspw. von der Anzahl an vorhandenen Lagerelementen, deren Materialeigenschaften oder deren Shore-Härte bzw. deren Härtegrad, aber auch von deren Verformung.

Die Vorspannkraft bzw. die Ausführung der Lagerelemente ist insbesondere derartig definiert, dass die jeweiligen Arbeitswerkzeuge beim Auftreffen dieser auf Hindernisse oder Steine oder dergleichen noch derartig nach oben ausweichen und ausfedern können, ohne dass dies zu einer Beschädigung des Arbeitswerkzeuges führt.

Zur Erzeugung eines definierten bzw. definierbaren Auflagedrucks und/oder zur Variation bzw. zur Regelung der jeweiligen Arbeitstiefe der Arbeitswerkzeuge ist der Träger, um eine bspw. quer zur Fahrrichtung verlaufende Drehachse, schwenkbar an einem Lagerflansch bzw. an einem Rahmenelement der landwirtschaftlichen Maschine montiert oder angebracht, wobei der Träger mittels zumindest eines diesem zugeordneten Aktors entsprechend verschwenkt werden kann und somit in Abhängigkeit der jeweiligen Verschwenkung des Trägers der Auflagedruck und/oder die Arbeitstiefe entsprechend vergrößert oder verkleinert wird.

Zur Erfassung des tatsächlich auf das Arbeitswerkzeug wirkenden Auflagedrucks und/oder zur Erfassung der tatsächlichen Arbeitstiefe ist zumindest einem Arbeitswerkzeug, der wenigstens zwei an einem Träger montierten Arbeitswerkzeuge umfasst, ein Messmittel zugeordnet, bzw. ist jeder Sektion aus Arbeitswerkzeugen und Träger zumindest ein Messmittel zugeordnet.

Um an allen Arbeitswerkzeugen einen gewünschten konstanten Auflagedruck und/oder eine gewünschte konstante Arbeitstiefe zu erzielen, ist vorgesehen, dass der Aktor auf Basis des mittels des zumindest einen Messmittels ermittelten Auflagedrucks und/oder der ermittelten Arbeitstiefe sowie der Anzahl der an dem gemeinsamen Träger montierten Arbeitswerkzeuge angesteuert wird.

Der Aktor wird hierbei insbesondere derartig angesteuert, dass dessen Verfahrweg verlängert oder verkürzt wird, so dass der Träger jeweils in dessen Winkelposition bspw. in Bezug auf eine Ackerfläche oder Bodenoberfläche verändert wird. Durch eine Veränderung dieser Winkelposition kann somit insbesondere die Vorspannung der elastischen Lagerelemente verändert werden bzw. kann somit jeweils die Kraft verändert werden, mittels der die Arbeitswerkzeuge mittels der Lagerelemente auf eine Boden- oder Ackerfläche gedrückt werden und somit auf Basis der Winkelposition des Trägers der Auflagedruck verändert und eingestellt werden. D. h. mittels des Aktors kann jeweils bspw. der Winkel des Trägers in Bezug auf eine Ackerfläche oder Bodenoberfläche vergrößert oder verkleinert werden und somit der Auflagedruck und/oder die Arbeitstiefe verändert werden. Hierbei kann insbesondere vorgesehen sein, dass je kleiner der Winkel ist, desto größer sind die Arbeitstiefe und/oder der Auflagedruck. Ebenso kann auf Basis der Winkelposition jeweils die Arbeitstiefe variieren und somit ebenso durch Veränderung der Winkelposition des Trägers wiederum die Arbeitstiefe der Arbeitswerkzeuge verändert und eingestellt werden.

Neben einer Anpassung des Winkels des Trägers wäre es zudem denkbar, den Aktor mit einer veränderbaren Kraft zu beaufschlagen, so dass bspw. die jeweilige mittels des Aktors auf den Träger wirkende Kraft verändert wird. Insbesondere ist diese Kraft jeweils gleich wie der mittels des zumindest einen Messmittels ermittelte Auflagedruck sowie die Anzahl der an dem gemeinsamen Träger montierten Arbeitswerkzeuge. So kann vorgesehen sein, dass mittels des Aktors jeweils ein definiertes bzw. veränderbares Kräftegleichgewicht zwischen Aktor und Arbeitswerkzeugen erzeugt wird, wobei dieses Kräftegleichgewicht insbesondere auch bei der Überfahrt von Kuppen oder Senken entsprechend mit geregelt werden kann.

Der Aktor kann insbesondere ein elektrisch, pneumatisch oder hydraulisch betriebener Aktor sein, oder bspw. auch ein pneumatisch oder hydraulischer Aktor, der elektrisch angesteuert wird. Insbesondere kann der Aktor als Linearantrieb oder als Drehantrieb ausgeführt sein. So könnte der Aktor bspw. ein hydraulisch oder pneumatisch betriebener Zylinder sein. Zudem kann der Aktor bspw. mittels eines Hebels oder eines Übertragungsmechanismus mit dem Träger verbunden sein. Zudem könnte dieser, insbesondere bei der Ausführung als Drehantrieb in den Träger integriert sein und diesen um dessen Mittelachse bzw. dessen Drehachse entsprechend verschwenken. Zudem kann der Aktor mittels einer elektrischen und/oder hydraulischen und/oder pneumatischen Steuerung angesteuert werden. Insbesondere kann auch eine Rechnereinheit bzw. eine Regelungseinrichtung vorgesehen sein, in der die jeweiligen von den Messmitteln erfassten Werte mittels eines Steuerungsprogramms derartig ausgewertet werden, dass mittels der Rechnereinheit bzw. mittels der mit der Rechnereinheit wirkverbundenen Steuerung der Aktor entsprechend angesteuert bzw. geregelt wird.

Es sei angemerkt, dass im Sinn der Erfindung der Begriff "Regelung" als Oberbegriff für jegliche Art der Einflussnahme auf den Aktor verstanden wird, wobei der Begriff "Regelung" auch eine "Steuerung" umfasst, da eine Regelung eine Steuerung mit einer Rückkopplung der gesteuerten Größe ist.

Mittels der elastischen Lagerelemente wird jeweils bspw. in Abhängigkeit des Winkels des Trägers in Bezug auf die Bodenoberfläche ein Moment erzeugt, wobei dieses Moment bspw. umso größer ist, umso kleiner der Winkel zwischen dem Träger und der Ackerfläche ist und wobei dieses Moment wiederum den jeweiligen Auflagedruck am Arbeitswerkzeug erzeugt.

Um den tatsächlichen an einem Arbeitswerkzeug bzw. an dessen Komponenten und Werkzeugen vorhandenen Auflagedruck und/oder die tatsächliche Arbeitstiefe zu ermitteln, ist erfindungsgemäß zudem vorgesehen, dass zumindest einem Arbeitswerkzeug der an einem Träger montierten Arbeitswerkzeugen oder einer Sektion von Arbeitswerkzeugen zumindest ein Messmittel zugeordnet ist. Der somit ermittelte Auflagedruck bzw. das auf die Arbeitswerkzeuge ausgeübte oder wirkende Moment kann auf Basis der Anzahl an vorhandenen Arbeitswerkzeugen entsprechend hochgerechnet werden. Dies lässt sich bspw. wie folgt mathematisch darstellen.

$$Mges \equiv Fa \times la \equiv M1 + Mn....$$

Hierbei bedeuten:

$Mges =$     Durch Lagerelemente erzeugte Moment

$Fa$     Durch Aktor erzeugte Kraft

$la =$     Hebelarm zwischen Aktor und Drehachse des Trägers

$M1 =$     Auf das Arbeitswerkzeug wirkendes Moment, berechnet durch das Produkt aus:

$$F1 \times l1$$

wobei wiederum folgendes definiert ist:

     $F1$ = Auflagedruck des Arbeitswerkzeuges

     $l1$ = Hebelarm zwischen Drehachse des Trägers und Auflagepunkt des Werkzeuges des Arbeitswerkzeuges

$Mn.... =$     Momente entsprechend der Anzahl an Arbeitswerkzeugen, welches gemäß $M1$ berechnet wird

Wird nun mit Hilfe des zumindest einen Messmittels der Auflagedruck eines Arbeitswerkzeuges ermittelt, kann mittels der oben genannten Formel die jeweils erforderliche Erhöhung der durch die Lagerelemente hervorgerufenen Momente bzw. *Mges* definiert werden. Diese Auswertung kann mittels eines in einer Regelungseinrichtung hinterlegten Steuerungsprogramms erfolgen.

Sind bspw. an einem Träger vier identische Arbeitswerkzeuge angebaut und wird an einem Arbeitswerkzeug ein Auflagedruck von 500 Newton (500 N) ermittelt, so bedeutet dies, dass die Summe der Auflagedrücke 2000 N beträgt. Ist jedoch auf Auflagedruck von 600 N je Arbeitswerkzeug gewünscht, so bedeutet dies, dass das mittels der Lagerelemente erzeugte Moment um 20 % erhöht werden muss.

In einer ersten Ausführungsvariante kann vorgesehen sein, dass der Aktor den Winkel des Trägers so lange verändert bzw. anpasst, bis vom zumindest einen Messmittel der gewünschte Wert von 600 N ausgegeben bzw. ermittelt wird. Auch könnte die durch den Aktor erzeugte Kraft entsprechend erhöht werden, bis wiederum mit dem zumindest einen Messmittel der benötigte Wert ausgegeben wird. Sobald dies der Fall ist, behält der Aktor seine aktuelle Position und/oder erzeugte Kraft solange bei, bis wieder eine Differenz zwischen den gewünschten 600 N und dem mittels des zumindest einen Messmittels erfassten Wert vorliegt, wobei in einer derartigen Ausführungsvariante mittels des Steuerungsprogramms bzw. mittels der Regelungseinrichtung insbesondere ein Ist-Wert - Soll-Wertvergleich durchgeführt wird.

In einer anderen Ausführungsvariante kann vorgesehen sein, dass in der Regelungseinrichtung bzw. im Steuerungsprogramm jeweils Kennwerte hinterlegt sind, welche bspw. beinhalten, um wieviel Prozent sich jeweils der Auflagedruck eines Arbeitswerkzeuges bei einer definierten Winkelveränderung oder Kraftveränderung ändert. So kann bspw. vorgesehen sein, dass eine Winkelveränderung des Trägers von 1° einer Erhöhung oder Verringerung des Auflagedrucks von 1 % entspricht. Auch könnte im Steuerungsprogramm hinterlegt sein, dass bspw. eine Veränderung der Länge des Aktors von bspw. 1 cm einer Winkelveränderung von 1° entspricht. Auch könnte hinterlegt sein, dass bspw. eine Verlängerung des Aktors von bspw. 1 cm einer Erhöhung oder Verringerung des Auflagedrucks von 1 % entspricht. Zur Erfassung der Verlängerung des Aktors oder der Winkelveränderung könnten diesen Komponenten ebenso oder zusätzlich zumindest ein Messmittel zugeordnet sein.

In einer weiteren Ausführungsform könnte darüber hinaus vorgesehen sein, dass bspw. von den jeweiligen elastischen Lagerelementen Kennlinien und/oder Kennwerte im Steuerungsprogramm hinterlegt sind, über welche Kennlinien und/oder Kennwerte jeweils die Wirkzusammenhänge zwischen Moment und Winkelveränderung berücksichtigt werden. Dies ist insbesondere dann von Vorteil, wenn die elastischen Lagerelemente keine lineare Kennlinie aufweisen, wenn also zwischen Moment und Winkelveränderung und/oder Kraftveränderung des Aktors keine direkte Proportionalität vorliegt, sondern wenn die Kennlinie einem nicht linearen System entspricht, d. h. dass zwischen Moment und Winkelveränderung und/oder Kraftveränderung des Aktors keine direkte Proportionalität vorhanden ist. So kann wiederum mittels der Kennlinien und/oder der Kennwerte jeder Winkelposition oder jeder Aktorposition ein durch die Lagerelemente erzeugtes bzw. hervorgerufenes Moment zugeordnet werden, aus welchem Moment mittels der Steuerungseinrichtung wiederum der Auflagedruck und/oder die Arbeitstiefe ermittelt werden kann.

Die Berücksichtigung dieser Kennlinie und/oder dieser Kennwerte bzw. das Hinterlegen einer Kennlinie und/oder der Kennwerte der Lagerelemente kann insbesondere von Vorteil sein, wenn an einem Träger Arbeitswerkzeuge mit verschiedenen Lagerelementen angebracht sind, so dass wiederum jedem Lagerelement eine entsprechende Kennlinie und/oder ein entsprechender Kennwert zugeordnet werden kann.

Die Kennlinien und/oder Kennwerte können bspw. manuell in eine Regelungseinrichtung hinterlegt bzw. eingegeben werden, können aber wahlweise auch von einer Datenbank abgerufen werden. Auch kann die Regelungseinrichtung mit einer Datenbank verbunden sein, um so die Kennlinien und/oder die Kennwerte zu erhalten.

In einer weiteren Ausführungsvariante sieht die Erfindung eine kontinuierliche und/oder ununterbrochene Regelung der Auflagedrücke und/oder der Arbeitstiefe vor. In einer anderen Ausführungsvariante könnten die Auflagedrücke und/oder die Arbeitstiefe periodisch überwacht werden, so dass bspw. Zeitintervalle vorgesehen sein können, in welchen eine Regelung erfolgt. Auch könnten diese Zeitintervalle in Abhängigkeit von der jeweiligen Position der landwirtschaftlichen Maschine beeinflusst werden, so dass bspw. an bestimmten Stellen einer Ackerfläche eine häufigere Regelung als an anderen Stellen stattfindet. Zudem könnte bspw. an einem Vorgewende eine häufigere Regelung stattfinden, aber auch nachdem die Maschine bzw. die Arbeitswerkzeuge bspw. nach dem Vorgewende abgesenkt wurden.

Des Weiteren können Grenzwerte definiert sein, innerhalb derer keine Regelung stattfindet. So könnte bspw. vorgesehen, dass eine Regelung des Auflagedrucks und/oder der Arbeitstiefe erst ab einer gewissen Differenz zwischen IST-Wert und Soll-Wert erfolgt, wobei diese Differenz bspw. einem Prozentwert von 5% oder 10% oder mehr entsprechen kann. Auch können für den jeweiligen Auflagedruck entsprechende Fenster definiert sein, innerhalb derer keine aktive Regelung erfolgt.

Um zu erreichen, dass die Arbeitswerkzeuge auch bei Ackerflächen eingesetzt werden können, auf welchen große Mengen an Ernterückständen vorhanden sind, ist in einer Weiterbildung der Erfindung vorgesehen, dass an einem Träger Arbeitswerkzeuge angebracht sind, welche unterschiedliche Längen aufweisen, d. h. dass beispielsweise die Abstände zwischen der Drehachse bzw. zwischen dem Lagerabschnitt und den Werkzeugen der Arbeitswerkzeuge unterschiedliche Längen aufweisen. Durch eine derartige Ausführungsform wird ein sog. hoher Durchgang erreicht, wodurch insbesondere Verstopfungen verhindert werden können.

Auch diese Längenunterschiede können entsprechend im Steuerungsprogramm mit berücksichtigt werden. Sind beispielsweise an einem Träger wiederum vier Arbeitswerkzeuge angebracht, von denen jeweils zwei die gleiche Länge aufweisen, so lässt sich dies gemäß nachfolgendem mathematischem Zusammenhang darstellen:

$$Mges \equiv Fa \times la \equiv (M1 + M1n....) + (M2 + M2n....)$$

Hierbei bedeuten:

*Mges* =       Durch Lagerelemente erzeugte Moment

*Fa*       Durch Aktor erzeugte Kraft

*la* =       Hebelarm zwischen Aktor und Drehachse des Trägers

*M*1 =       Auf das kurze Arbeitswerkzeug wirkendes Moment, berechnet durch das Produkt aus:

$$F1 \times l1$$

      wobei wiederum folgendes definiert ist:

         *F*1 = Auflagedruck des Arbeitswerkzeuges bzw. des Werkzeuges des

         kurzen Arbeitswerkzeuges

         *l*1 = Hebelarm zwischen Drehachse des Trägers und Auflagepunkt des Werkzeuges des Arbeitswerkzeuges

*M*1*n....* =       Momente entsprechend der Anzahl an kurzen Arbeitswerkzeugen, welches gemäß *M*1 berechnet wird

M2 =       Auf das Arbeitswerkzeug wirkendes Moment, berechnet durch das Produkt aus:

$$F2 \times l2$$

      wobei wiederum folgendes definiert ist:

         *F*2 = Auflagedruck des Arbeitswerkzeuges bzw. des Werkzeuges des langen Arbeitswerkzeuges

         *l*2 = Hebelarm zwischen Drehachse des Trägers und Auflagepunkt des Werkzeuges des Arbeitswerkzeuges

*M* 2*n....*       Momente entsprechend der Anzahl an langen Arbeitswerkzeugen, welches gemäß *M*2 berechnet wird

Es sei hierbei noch angemerkt, dass die vorgenannten Formeln jeweils voraussetzen, dass der Auflagepunkt des Arbeitswerkzeuges, d. h. also der Punkt an dem der Auflagedruck in das Arbeitswerkzeug eingeleitet wird sowie das zumindest eine Messmittel jeweils in einem gleichen Abstand zur Drehachse angeordnet sind, diese also jeweils die gleichen Hebellängen bzw. Hebelarme aufweisen. Insofern dies nicht der Fall ist, könnten im Steuerungsprogramm zudem entsprechende Formeln und Regelparameter hinterlegt sein, um dies zu berücksichtigen, wobei sich bei einer unterschiedlichen Anordnung der Auflagedruck bspw. wie folgt berechnen lässt:

$$F1 = \frac{Fm \times lm}{l1}$$

Hierbei bedeuten:

*F*1       Auflagedruck des Arbeitswerkzeuges

*l*1     Hebelarm zwischen Drehachse des Trägers und Auflagepunkt des Werkzeuges des Arbeitswerkzeuges

*Fm*     Mittels des Messmittels erfasste Kraft

*lm*     Hebelarm zwischen Drehachse des Trägers und Messmittel

Zudem ist zu beachten, dass in den vorgenannten Formeln jeweils davon ausgegangen wird, dass an allen Arbeitswerkzeugen die gleichen Lagerelemente verwendet werden bzw. dass unabhängig von der jeweiligen Hebellänge des Arbeitswerkzeuges angenommen wird, dass die Lagerelemente bei bspw. einer Winkeländerung die gleichen Eigenschaften aufweisen sowie dass die von diesen erzeugten Momente jeweils gleich sind. Um dies zu gewährleisten, kann erfindungsgemäß bspw. vorgesehen sein, dass die Lagerelemente jeweils in Abhängigkeit der Hebellänge des Arbeitswerkzeuges entsprechend angepasst sind, so dass durch eine Winkelveränderung des Trägers und/oder durch eine Veränderung der durch den Aktor erzeugten Kraft dennoch an allen Arbeitswerkzeugen bzw. an allen Werkzeugen dieser die gleichen Auflagedrücke hervorgerufen werden.

So wäre es denkbar, dass bspw. die Breite der Lagerelemente auf die Hebellänge abgestimmt ist, um somit wiederum das jeweils zumindest annähernd gleiche Moment auf jedem Arbeitswerkzeug zu erzeugen, wobei die Verhältnisse aus Breite und Hebelarm und Moment vorzugsweise jeweils direkt proportional zueinander sind.

Dies lässt sich bspw. wie folgt darstellen:

$$\frac{b1}{b2} \sim \frac{l1}{l2} \sim \frac{M1}{M2}$$

Hierbei bedeuten:

*b*1     Breite der Lagerelemente des kurzen Arbeitswerkzeugs oder Kennwert der Lagerelemente des kurzen Arbeits-werkzeugs.

*b*2     Breite der Lagerelemente des langen Arbeitswerkzeugs oder Kennwert der Lagerelemente des langen Arbeitswerkzeugs.

*l*1     Hebelarm zwischen Drehachse des Trägers und Auflagepunkt des Werkzeuges des kurzen Arbeitswerkzeugs.

*l*2     Hebelarm zwischen Drehachse des Trägers und Auflagepunkt des Werkzeuges des langen Arbeitswerkzeugs.

*M*1     Auf das kurze Arbeitswerkzeug wirkendes Moment.

*M*2     Auf das lange Arbeitswerkzeug wirkendes Moment.

Neben einer angepassten Breite der Lagerelemente könnten jedoch noch weitere andere Anpassungen der Lagerelemente entsprechend angewendet werden. So kann bspw. die Anzahl an Lagerelementen entsprechend der Hebellänge variieren. Auch könnten die Querschnitte der Lagerelemente variieren. Auch könnten verschiedene Materialien der Lagerelemente eingesetzt werden, welche insbesondere unterschiedlichen Härtegrade aufweisen. Auch könnten die Kräfte jeweils entsprechend der Differenz zwischen dem Querschnitt des Trägers und dem Querschnitt des Lagerabschnitts variieren. Wobei auch wiederum diese jeweiligen Anpassungen bspw. als Kennwert im Steuerungsprogramm hinterlegt sein können. Insbesondere können bzw. sind auch wiederum diese Kennwerte proportional zu den Hebellängen und zu den Momenten.

Insofern an den Arbeitswerkzeugen verschiedene Lagerelemente eingesetzt werden, könnten zudem wiederum mehrere bzw. verschiedene Kennlinien und/oder Kennwerte der Lagerelemente im Steuerungsprogramm hinterlegt sein oder diese Kennlinien und/oder Kennwerte können aus einer Datenbank abgerufen werden, wobei auch wiederum in dieser Ausführung mittels des Steuerungsprogramms jeweils die Wirkzusammenhänge zwischen den Momenten und der Winkelveränderung und/oder der durch den Aktor erzeugten Kraft berücksichtigt werden können.

In einer Weiterbildung der Erfindung könnte vorgesehen sein, dass an den an einem Träger montierten Arbeitswerkzeugen mehrere Messmittel angebracht sind. Insbesondere kann an jedem Arbeitswerkzeug zumindest ein Messmittel vorgesehen und/oder angeordnet sein. Auch könnte vorgesehen sein, dass jeweils zumindest ein Messmittel an einem kurzen Arbeitswerkzeug und zumindest ein Messmittel an einem langen Arbeitswerkzeug vorhanden ist, um somit eine noch genauere Einstellung der Auflagedrücke zu erreichen, wobei jedoch gemäß der oben ausgeführten Beschreibungen durch den gemeinsamen Träger auch bereits mit zumindest einem Messmittel ein ausreichendes Arbeitsergebnis erzielt werden kann.

Das zumindest eine Messmittel kann bspw. an einem Rahmen des Arbeitswerkzeugs angebracht sein und bspw. die durch den Auflagedruck am Arbeitswerkzeug hervorgerufene Verformung ermitteln, wobei dies bspw. mittels Sensoren erfolgt, welche nach dem Prinzip der Wegmessung oder nach dem Prinzip der Widerstandsmessung arbeiten. Insbesondere kommen hierbei bspw. Dehnungsmessstreifen zum Einsatz. Auch Messmittel, die nach anderen Messprinzipien arbeiten, wären denkbar. Auch optische Messmittel könnten eingesetzt werden, insbesondere zur Ermittlung der Arbeitstiefe. Auch könnte das zumindest eine Messmittel in den Lagerungen und/oder Drehpunkten der am Arbeitswerkzeug angebrachten Werkzeuge angebracht sein. Auch wären hier sogenannte Messbolzen einsetzbar.

In einer Weiterbildung könnte zudem vorgesehen sein, dass die jeweiligen Auflagedrücke mit Hilfe einer Winkelerfassung und/oder einer Positionserkennung des Trägers und/oder des Aktors erfolgt. Hierbei könnten insbesondere die in der Regelungseinrichtung bzw. im Steuerungsprogramm hinterlegten Kennlinien und/oder Kennwerte der Lagerelemente verwendet werden. So dass bspw. auf Basis einer aktuellen Winkelposition und einem entsprechenden Kennwert und/oder einer entsprechenden Kennlinie der Lagerelemente auf einen Auflagedruck zurückgeschlossen werden kann. Ebenso kann entsprechend mit der aktuellen Länge bzw. Position des Aktors verfahren werden, so dass wiederum auf Basis einer aktuellen Position des Aktors und einen entsprechenden Kennwert und/oder einer entsprechenden Kennlinien der Lagerelemente auf einen Auflagedruck geschlossen werden kann.

Ebenso könnte auch mit einer durch den Aktor erzeugten Kraft verfahren werden, so dass bspw. auf Basis einer aktuellen durch den Aktor hervorgerufen Kraft und einem entsprechenden Kennwert und/oder einer entsprechenden Kennlinie der Lagerelemente auf einen Auflagedruck zurückgeschlossen werden kann.

Darüber hinaus kann vorgesehen, dass der Aktor mit einem Wegmesssystem ausgeführt ist, oder dem Aktor ein Positionserkennungssystem zugeordnet oder in diesem integriert ist.

Um den jeweiligen Verschleiß der Lagerelemente zu ermitteln, könnte in einer weiteren Ausführungsvariante ein entsprechendes Überwachungssystem vorgesehen sein. So kann vorgesehen sein, dass im Steuerungsprogramm für die jeweiligen Lagerelemente entsprechende Kennlinien und/oder Kennwerte hinterlegt sind bzw. dass diese Kennlinien und/oder Kennwerte von einer Datenbank abgerufen werden können. Die Kennlinien und/oder Kennwerte können hierbei unter anderem einen Wirkzusammenhang zwischen dem von den Lagerelementen erzeugbaren Moment oder der erzeugbaren Vorspannkraft in Bezug auf die Winkelposition des Trägers oder in Bezug auf die aktuelle Position und/oder Stellung des Aktors und/oder der aktuell durch den Aktor erzeugten Kraft aufzeigen. Somit kann mittels des Steuerungsprogramms ermittelt werden, wie groß der jeweilige Auflagedruck am Arbeitswerkzeug sein soll bzw. sein sollte, wobei dieser Auflagedruck wiederum mittels des mit dem zumindest einen Messmittel erfassten Auflagedruck verglichen wird. Insofern hier Abweichungen zwischen dem Soll-Wert- und dem Tatsächlich gemessenen Wert vorliegen, kann daraus geschlossen werden, dass die Lagerelemente nicht mehr deren Ursprungseigenschaften aufweisen und verschlissen sind bzw. nicht mehr deren gewünschten Eigenschaften aufweisen. In Abhängigkeit der Größe der Differenz kann anschließend bspw. mittels einer Ausgabeeinrichtung ein akustisches und/oder optisches Signal oder ein Hinweis ausgegeben und/oder angezeigt werden und somit eine Bedienperson der landwirtschaftlichen Maschine darauf hingewiesen werden, dass die Lagerelemente zur Erreichung einer optimalen Feldarbeit gewechselt werden müssen. Hierbei können auch wiederum Grenzwerte definiert sein können, so dass bzw. bis zu einer definierten Differenz keine Ausgabe erfolgt und erst ab einem bestimmten Grenzwert eine Ausgabe bzw. Anzeige erfolgt.

Das Arbeitswerkzeug kann insbesondere ein Säschar sein. Das Säschar kann wiederum mittels einer Viergelenk- oder einer Parallelogrammanordnung am Träger gelagert sein und eine Obere- und eine Untere- Schwinge aufweisen , wobei zumindest eine der Schwingen mittels elastisch verformbaren Lagerelementen mit einem Träger, an welchem zumindest zwei oder mehr derartiger Säschare angebracht sind, verbunden wird. Zudem könnte bei einer derartigen Anordnung auch vorgesehen sein, dass bspw. die Arbeitstiefe durch eine Längenänderung von zumindest einer der Schwingen erfolgt, insbesondere durch eine Längenänderung der oberen Schwinge. Auch könnte das zumindest eine Messmittel bspw. einer Schwinge entsprechend zugeordnet sein. Das Säschar kann zudem als sog. Doppelscheibenschar oder Einscheibenschar ausgeführt sein. Zudem kann dem Säschar eine Einzelkorndosiervorrichtung zugeordnet sein. Insbesondere kann die Einzelkorndosiervorrichtung am Rahmen des Arbeitswerkzeugs, aber auch an einem Rahmenelement der landwirtschaftlichen Maschine angebracht sein.

Das Arbeitswerkzeug kann zudem als Walze ausgeführt sein, wobei bei einer derartigen Ausführung der Träger bspw. eine Achse, um welche die Walze jeweils drehbar gelagert wird, sein kann. Die wenigstens zwei an dem Träger angebauten Arbeitswerkzeuge können in diesem Fall jeweils Lagerflansche sein, mittels welcher die Walze gelagert wird und welche Lagerflansche wiederum an einer Rahmenkonstruktion einer landwirtschaftlichen Maschine angebaut werden. Diesen Lagerflanschen können zur Montage an der Rahmenkonstruktion wiederum entsprechende elastische Lagerelemente zugeordnet sein. Die Verstellung der Arbeitstiefe und/oder des Auflagedrucks der Walze kann wiederum durch Verschwenkung dieser in Bezug auf die Rahmenkonstruktion mittels zumindest eines Aktors erfolgen.

Da in Abhängigkeit des jeweiligen Auflagedrucks und/oder der jeweiligen Arbeitstiefe bzw. in Abhängigkeit der Größe des durch die Lagerelemente erzeugten Moments auch der jeweilige Ausfederweg der Arbeitswerkzeuge verringert werden kann, kann erfindungsgemäß zudem vorgesehen sein, dass der jeweilige maximale Auflagedruck und/oder die maximale Arbeitstiefe jeweils begrenzt werden, um somit noch einen ausreichenden Ausfederweg der Arbeitswerkzeuge zu gewährleisten. So kann bspw. vorgesehen sein, dass der Träger nur bis zu einem definierten Winkel verschwenkt werden kann, oder dass der Aktor einen entsprechend begrenzten Verfahrweg und/oder eine begrenzte erzeugte Kraft aufweist. Dabei können diese Positionen, Stellungen und Kräfte insbesondere derartig definiert sein, dass der Ausfederweg des Arbeitswerkzeuges größer oder gleich ist, als die aktuelle Arbeitstiefe des Arbeitswerkzeuges. Auch können mittels des Steuerungsprogramms wiederum Kennlinien und/oder Kennwerte herangezogen werden, die eine Angabe ermöglichen, welches maximale Moment die jeweiligen Lagerelemente erzeugen könne, bzw. bis zu welchem Moment die Lagerelemente jeweils elastisch verformbar bleiben. In Abhängigkeit dieser elastischen Verformbarkeit bzw. in Abhängigkeit dieses Moments kann wiederum ein Maximalwert für die Arbeitstiefe und/oder den Auflagedruck definiert sein.

Insofern somit nicht die gewünschte Arbeitstiefe und/oder der gewünschte Auflagedruck erreicht werden kann, kann zudem vorgesehen sein, dass mittels der Regelungseinrichtung oder mittels einer mit der Rechnereinheit verbundenen Ausgabeeinrichtung bspw. ein akustisches und/oder optisches Signal ausgegeben wird.

Neben einer Ausführung des Aktors als elektrisches und/oder pneumatisches und/oder hydraulisch betriebenes Stellglied wäre es auch denkbar, den Aktor als manuell betriebenes Stellglied auszuführen, wobei in diesem Fall der Aktor bspw. eine mechanische Kurbel sein kann. Insofern der Aktor als mechanisches Stellglied ausgeführt ist, könnte bspw. vorgesehen sein, dass auf Basis der mittels der Regelungseinrichtung bzw. mittels des Steuerungsprogramms ermittelten Erhöhung oder Verringerung des Auflagedrucks und/oder der Arbeitstiefe bspw. ein akustisches und/oder optisches Signal und/oder Anzeige ausgegeben wird und somit eine Bedienperson entsprechend das mechanische Stellglied justieren kann.

Zudem könnte vorgesehen sein, die jeweils auf den Aktor wirkende Kraft zu ermitteln, wobei auch wiederum diese Kraft im Steuerungsprogramm entsprechend mit ausgewertet werden kann. Die Ermittlung der Kraft des Aktors kann bspw. mittels eines Drucksensors oder eines Kraftsensors erfolgen. Auch denkbar wäre eine rechnerische Auswertung der Kraft auf Basis bspw. eines vorhandenen Öldrucks und/oder eines vorhandenen Volumenstroms und einer entsprechenden Kolbenfläche eines pneumatisch oder hydraulisch angetriebenen Aktors. Ebenso könnte bei einem elektrischen Aktor die jeweilige Kraft auf Basis von dessen Stromaufnahme oder auf Basis von dessen Drehmoment ermittelt werden.

In einer weiteren Ausführungsvariante könnte vorgesehen sein, dass die Sektionen bzw. das auch die Träger in deren Höhe, d. h. in deren Abstand zur Bodenoberfläche verstellbar sind, wobei hierfür wiederum entsprechende Aktoren vorgesehen sein können. Auch könnte der Lagerflansch oder das Rahmenelement, an dem der Träger montiert wird, drehbar und/oder in dessen Höhe verstellbar an der landwirtschaftlichen Maschine angebaut sein. So könnte bspw. in Abhängigkeit des ermittelten Auflagedrucks und/oder der ermittelten Arbeitstiefe auch die Höhe des Trägers verstellt werden. Kann bspw. durch eine Winkeländerung des Trägers kein Mindestwert des Auflagedrucks und/oder der Arbeitstiefe erreicht werden. So lässt dies bspw. darauf schließen, dass der Träger zu tief geführt wird und dieser in dessen Höhe verstellt werden muss. Auf Basis dieser Angabe kann anschließend bspw. die Höhe des Trägers automatisiert mittels eines Aktors oder manuell entsprechend angepasst werden.

Auch könnte eine Verstellung des Auflagedrucks und/oder der Arbeitstiefe in Abhängigkeit der aktuellen Position der landwirtschaftlichen Maschine erfolgen, wobei hierfür die landwirtschaftliche Maschine bzw. deren Regelungseinrichtung mit einem GPS-System bzw. mit einem Positionserkennungssystem in Verbindung stehen oder mit einem derartigen ausgestattet sein kann. Auch können Feldkarten oder Schlagkarteikarten im Steuerungsprogramm hinterlegt sein bzw. kann die Regelungseinrichtung mit entsprechenden Datenbanken in Verbindung stehen. Auf Basis der jeweiligen Position der landwirtschaftlichen Maschine kann eine entsprechende Erhöhung oder Verringerung des Auflagedrucks und/oder der Arbeitstiefe erfolgen.

In einer weiteren Ausführungsvariante kann zudem vorgesehen sein, dass die jeweiligen Sektionen jeweils unabhängig voneinander ausgehoben oder abgesenkt werden können, sowie das deren Arbeitstiefe und/oder deren Auflagedruck jeweils unabhängig voneinander variiert und verstellt werden können. So kann vorgesehen sein, dass bspw. bei der Ausführung der Arbeitswerkzeuge als Säschar, diese bspw. dann entsprechend ausgehoben werden, wenn eine Versorgung dieser mittels landwirtschaftlichen Verteilguts unterbrochen wird.

In einer weiteren Ausführungsvariante könnte zudem bspw. vorgesehen sein, dass der Aktor jeweils auf einen definierten Differenzdruck bzw. auf eine definierte Differenzkraft geregelt wird. So könnte vorgesehen sein, dass bspw. bei einem als doppeltwirkenden Zylinder ausgeführten Aktor zwischen Kolbenboden- und Kolbenstangenseite jeweils variabel veränderbare Drücke erzeugt werden können, wodurch wiederum die durch den Aktor erzeugte Kraft verändert werden kann. In Abhängigkeit des mittels der Messmittel erfassten Auflagedrucks und/oder der Arbeitstiefe kann anschließend ein definiertes Druck- bzw. Kräftegleichgewicht oder ein definierte Druck- bzw. Kräfteungleichgewicht erzeugt werden, wobei dies bspw. mittels Drucksensorik überwacht und Proportionalventilen eingestellt werden kann.

Das vorab beschriebene Regelungssystem wird insbesondere in einer landwirtschaftlichen Maschine zur Bodenbearbeitung und/oder zur Aussaat verwendet, wobei an der landwirtschaftlichen Maschine eine Mehrzahl von Arbeitswerkzeugen zur Bodenbearbeitung und/oder zur Aussaat angebracht und wobei jeweils wenigstes zwei derartige Arbeitswerkzeuge an einem gemeinsamen Träger montiert sein können.

Die landwirtschaftliche Maschine umfasst insbesondere zwei Sektionen von Arbeitswerkzeugen, welche Sektionen sich jeweils aus zumindest einem Träger an dem zumindest zwei Arbeitswerkzeuge schwenkbar, mittels elastischer Lagerelemente gelagert sind und einem Aktor, zur Verschwenkung des Trägers und/oder zur Veränderung des Auflagedrucks, zusammensetzt. Zur Erfassung eines Auflagedrucks und/oder einer Arbeitstiefe ist jeder Sektion zumindest ein Messmittel zugeordnet, wobei wiederum der jeweilige Aktor auf Basis des mittels des zumindest einen Messmittels ermittelten Auflagedrucks und/oder der ermittelten Arbeitstiefe sowie der Anzahl der an dem gemeinsamen Träger montierten Arbeitswerkzeuge angesteuert wird. Die jeweiligen Sektionen bzw. deren Aktoren können jeweils unabhängig voneinander angesteuert werden.

In einer Weiterbildung der Erfindung kann zudem vorgesehen sein, dass an der landwirtschaftlichen Maschine wenigstens zwei oder mehr Sektionen aus Arbeitswerkzeugen, Träger und Aktor zugeordnet sind, die Arbeitswerkzeuge jedoch jeweils unterschiedlich ausgeführt sind. So dass bspw. eine Sektion vorhanden sein kann, an der Arbeitswerkzeuge zur Bodenbearbeitung, wie bspw. Schneidscheiben angebracht sind, sowie dass eine Sektion vorhanden ist, an der Arbeitswerkzeuge zur Aussaat, wie bspw. Säschare angebracht sind.

Wenn zuvor das erfindungsgemäße Regelungssystem oder die erfindungsgemäße landwirtschaftliche Maschine beschrieben wurde, so sei an dieser Stelle ausdrücklich betont, dass alle Aspekte und Ausführungsvarianten, die im Zusammenhang mit diesem Regelungssystem und der landwirtschaftlichen Maschine erläutert wurden, gleichermaßen Teilaspekte des nachfolgenden erfindungsgemäßen Verfahrens betreffen oder sein können. Wenn daher an einer Stelle bei der Beschreibung oder auch bei den Anspruchsdefinitionen vom erfindungsgemäßen Regelungssystem oder von der erfindungsgemäße Maschine die Rede ist, so gilt dies gleichermaßen für das erfindungsgemäße Verfahren. In umgekehrter Weise gilt dasselbe, so dass auch alle Aspekte, die im Zusammenhang mit dem erfindungsgemäßen Verfahren erläutert werden, gleichermaßen Teilaspekte des Regelungssystems oder der landwirtschaftlichen Maschine sein können.

Zur Lösung der Aufgaben schlägt die Erfindung zudem ein Verfahren zur Regelung des Auflagedrucks und/oder der Arbeitstiefe von landwirtschaftlichen Arbeitswerkzeugen vor, wobei es sich bei den Arbeitswerkzeugen insbesondere um Werkzeuge und Komponenten zur Bodenbearbeitung und/oder zur Aussaat, wie bspw. Säschare, Schneidscheiben, Walzen, Zinken oder dergleichen handelt. Zudem findet das Verfahren vorzugsweise bei landwirtschaftlichen Maschinen zur Bodenbearbeitung und/oder zur Aussaat Verwendung.

Um die Anzahl an benötigten bzw. vorhandenen Aktoren auf ein Minimum zu reduzieren, ist vorgesehen, dass jeweils wenigstens zwei, drei oder mehr Arbeitswerkzeuge in einen Abstand zueinander an einem gemeinsamen Träger montiert sind, d. h. dass jeweils wenigstens zwei, drei oder mehr Arbeitswerkzeuge mittels bspw. eines Trägers mechanisch verbunden bzw. gekoppelt werden.

So kann vorgesehen sein, dass bspw. vier Arbeitswerkzeuge oder sechs Arbeitswerkzeuge und ein gemeinsamer Träger eine Sektion bilden, welcher Sektion ein Aktor zur Beeinflussung des Auflagedrucks bzw. zur Variation der Arbeitstiefe zugeordnet ist. Durch den gemeinsamen Träger werden die jeweiligen Bewegungen dieses auf alle, an diesem angebrachten Arbeitswerkzeuge übertragen, ohne hierfür eine hydraulische oder fluide Koppelung zu benötigen, wobei in Abhängigkeit der Anzahl an Arbeitswerkzeugen jeweils die Größe des Aktors angepasst sein kann.

Um zum einen eine kostengünstige und wartungsfreie Aufhängung bzw. Lagerung der Arbeitswerkzeuge zu erreichen sowie um auch bei hohen auf die Arbeitswerkzeuge wirkenden Auflagekräften noch ein ausweichen bzw. ein Ausfedern dieser beim Auftreffen auf Hindernisse wie Steine oder dergl. zu ermöglichen, ist des Weiteren vorgesehen, dass diese mittels elastisch verformbaren Lagerelementen am gemeinsamen Träger montiert sind.

Die Lagerelemente können durch den Einbau zwischen dem Lagerabschnitt und dem Träger jeweils verformt und vorgespannt werden. Die Lagerelemente erzeugen somit eine Vorspannkraft, d. h. die Schwenkbeweglichkeit der Arbeitswerkzeuge in Bezug auf den Träger wird hierbei durch die Vorspannkraft entsprechend beeinflusst.

Zur Erzeugung eines definierten bzw. definierbaren Auflagedrucks und/oder zur Variation bzw. zur Regelung der jeweiligen Arbeitstiefe der Arbeitswerkzeuge ist der Träger, um eine bspw. quer zur Fahrrichtung verlaufende Drehachse, schwenkbar an einem Lagerflansch bzw. an einem Rahmenelement der landwirtschaftlichen Maschine montiert oder angebracht, wobei der Träger mittels zumindest eines diesem zugeordneten Aktors entsprechend verschwenkt werden kann und somit in Abhängigkeit der jeweiligen Verschwenkung des Trägers und/oder in Abhängigkeit der jeweils durch den Aktor erzeugten Kraft der Auflagedruck und/oder die Arbeitstiefe entsprechend vergrößert oder verkleinert wird.

Zur Erfassung des tatsächlich auf das Arbeitswerkzeug wirkenden Auflagedrucks und/oder zur Erfassung der tatsächlichen Arbeitstiefe ist zumindest einem Arbeitswerkzeug, der wenigstens zwei an einem Träger montieren Arbeitswerkzeuge, zumindest ein Messmittel zugeordnet, bzw. ist jeder Sektion aus Arbeitswerkzeugen und Träger zumindest ein Messmittel zugeordnet.

Um an allen Arbeitswerkzeugen einen gewünschten konstanten Auflagedruck und/oder eine gewünschte konstante Arbeitstiefe zu erzielen, sieht das Verfahren vor, dass der Aktor auf Basis des mittels des zumindest einen Messmittels ermittelten Auflagedrucks und/oder der ermittelten Arbeitstiefe sowie der Anzahl der an dem gemeinsamen Träger montierten Arbeitswerkzeuge angesteuert wird.

Der Aktor wird hierbei insbesondere derartig angesteuert, dass dessen Verfahrweg verlängert oder verkürzt wird, so dass der Träger jeweils in dessen Winkelposition bspw. in Bezug auf eine Ackerfläche oder Bodenoberfläche verändert wird. Durch eine Veränderung dieser Winkelposition kann somit insbesondere die Vorspannung der elastischen Lagerelemente verändert werden bzw. kann somit jeweils die Kraft verändert werden, mittels der die Arbeitswerkzeuge mittels der Lagerelemente auf eine Boden- oder Ackerfläche gedrückt werden und somit auf Basis der Winkelposition des Trägers der Auflagedruck verändert und eingestellt werden. D. h. mittels des Aktors kann jeweils bspw. der Winkel des Trägers in Bezug auf eine Ackerfläche oder Bodenoberfläche vergrößert oder verkleinert werden und somit der Auflagedruck und/oder die Arbeitstiefe verändert werden. Dabei kann insbesondere vorgesehen sein, dass je kleiner der Winkel ist, desto größer sind die Arbeitstiefe und/oder der Auflagedruck. Ebenso kann auf Basis der Winkelposition jeweils die Arbeitstiefe variieren und somit ebenso durch Veränderung der Winkelposition des Trägers wiederum die Arbeitstiefe der Arbeitswerkzeuge verändert und eingestellt werden.

Neben einer Anpassung des Winkels des Trägers wäre es zudem denkbar, den Aktor mit einer veränderbaren Kraft zu beaufschlagen, so dass bspw. die jeweilige mittels des Aktors auf den Träger wirkende Kraft verändert wird. Insbesondere ist diese Kraft jeweils gleich wie der mittels des zumindest einen Messmittels ermittelte Auflagedruck sowie die Anzahl der an dem gemeinsamen Träger montierten Arbeitswerkzeuge. So kann vorgesehen sein, dass mittels des Aktors jeweils ein definiertes bzw. veränderbares Kräftegleichgewicht zwischen Aktor und Arbeitswerkzeugen erzeugt wird, wobei dieses Kräftegleichgewicht insbesondere auch bei der Überfahrt von Kuppen oder Senken entsprechend mit geregelt werden kann.

Der Aktor kann insbesondere ein elektrisch, pneumatisch oder hydraulisch betriebener Aktor sein, oder bspw. auch ein pneumatisch oder hydraulischer Aktor, der elektrisch angesteuert wird. Insbesondere kann der Aktor als Linearantrieb oder als Drehantrieb ausgeführt sein. So könnte der Aktor bspw. ein hydraulisch oder pneumatisch betriebener Zylinder sein. Zudem kann der Aktor mittels einer elektrischen und/oder hydraulischen und/oder pneumatischen Steuerung angesteuert werden, wobei insbesondere auch eine Rechnereinheit bzw. eine Regelungseinrichtung vorgesehen sein kann in der die jeweiligen von den Messmitteln erfassten Werte mittels eines Steuerungsprogramms derartig ausgewertet werden, dass mittels der Rechnereinheit bzw. mittels der mit der Rechnereinheit wirkverbundenen Steuerung der Aktor entsprechend angesteuert bzw. geregelt wird.

Mittels der elastischen Lagerelemente wird jeweils bspw. in Abhängigkeit des Winkels des Trägers in Bezug auf die Bodenoberfläche ein Moment erzeugt, wobei dieses Moment bspw. umso größer ist, umso kleiner der Winkel zwischen dem Träger und der Ackerfläche ist und wobei dieses Moment wiederum den jeweiligen Auflagedruck am Arbeitswerkzeug erzeugt.

Um den tatsächlichen an einem Arbeitswerkzeug bzw. an dessen Komponenten und Werkzeugen vorhandenen Auflagedruck und/oder die tatsächliche Arbeitstiefe zu ermitteln, ist erfindungsgemäß zudem vorgesehen, dass zumindest einem Arbeitswerkzeug der an einem Träger montierten Arbeitswerkzeugen oder einer Sektion von Arbeitswerkzeugen zumindest ein Messmittel zugeordnet ist, wobei der somit ermittelte Auflagedruck bzw. das auf die Arbeitswerkzeuge ausgeübte oder wirkende Moment auf Basis der Anzahl an vorhandenen Arbeitswerkzeugen entsprechend hochgerechnet werden kann.

In einer Ausführungsform könnte darüber hinaus vorgesehen sein, dass bspw. von den jeweiligen elastischen Lagerelementen Kennlinien und/oder Kennwerte im Steuerungsprogramm hinterlegt sind, über welche Kennlinien und/oder Kennwerte jeweils die Wirkzusammenhänge zwischen Moment und Winkelveränderung berücksichtigt werden. Dies ist insbesondere dann von Vorteil, wenn die elastischen Lagerelemente keine lineare Kennlinie aufweisen, wenn also zwischen Moment und Winkelveränderung und/oder Kraftveränderung des Aktors keine direkte Proportionalität vorliegt, sondern wenn die Kennlinie einem nicht linearen System entspricht, d. h. dass zwischen Moment und Winkelveränderung und/oder Kraftveränderung des Aktors keine direkte Proportionalität vorhanden ist. So kann wiederum mittels der Kennlinien und/oder der Kennwerte jeder Winkelposition oder jeder Aktorposition eine durch die Lagerelemente erzeugtes bzw. hervorgerufenes Moment zugeordnet werden, aus welchem Moment mittels der Steuerungseinrichtung wiederum der Auflagedruck und/oder die Arbeitstiefe ermittelt werden kann.

Die Berücksichtigung dieser Kennlinie und/oder dieser Kennwerte bzw. das Hinterlegen einer Kennlinie und/oder der Kennwerte der Lagerelemente kann insbesondere von Vorteil sein, wenn an einem Träger Arbeitswerkzeuge mit verschiedenen Lagerelementen angebracht sind. So dass wiederum jedem Lagerelement eine entsprechende Kennlinie und/oder ein entsprechender Kennwert zugeordnet werden kann.

Die Kennlinien und/oder Kennwerte können bspw. manuell in eine Regelungseinrichtung hinterlegt bzw. eingegeben werden, können aber auch von einer Datenbank abgerufen werden. Auch kann die Regelungseinrichtung mit einer Datenbank verbunden sein, um so die Kennlinien und/oder die Kennwerte zu erhalten.

In einer weiteren Ausführungsvariante sieht die Erfindung eine kontinuierliche und/oder ununterbrochene Regelung der Auflagedrücke und/oder der Arbeitstiefe vor. In einer anderen Ausführungsvariante könnten die Auflagedrücke und/oder die Arbeitstiefe periodisch überwacht werden, so dass bspw. Zeitintervalle vorgesehen sein können, in welchen eine Regelung erfolgt. Auch könnten diese Zeitintervalle in Abhängigkeit von der jeweiligen Position der landwirtschaftlichen Maschine beeinflusst werden, so dass bspw. an bestimmten Stellen einer Ackerfläche eine häufigere Regelung als an anderen Stellen stattfindet. Zudem könnte bspw. an einem Vorgewende eine häufigere Regelung stattfinden, aber auch nachdem die Maschine bzw. die Arbeitswerkzeuge bspw. nach dem Vorgewende abgesenkt wurden.

Des Weiteren können Grenzwerte definiert sein, innerhalb derer keine Regelung stattfindet. So könnte bspw. vorgesehen sein, dass eine Regelung des Auflagedrucks und/oder der Arbeitstiefe erst ab einer gewissen Differenz zwischen IST-Wert und Soll-Wert erfolgt, wobei diese Differenz bspw. einem Prozentwert von 5 % oder 10 % oder mehr entsprechen kann. Auch können für den jeweiligen Auflagedruck entsprechende Fenster definiert sein, innerhalb derer keine aktive Regelung erfolgt.

Insofern an den Arbeitswerkzeugen verschiedene Lagerelemente eingesetzt werden, könnten zudem wiederum mehrere bzw. verschiedene Kennlinien und/oder Kennwerte der Lagerelemente im Steuerungsprogramm hinterlegt sein oder diese Kennlinien und/oder Kennwerte aus einer Datenbank abgerufen werden, wobei auch wiederum in dieser Ausführung mittels des Steuerungsprogramms jeweils die Wirkzusammenhänge zwischen den Momenten und der Winkelveränderung und/oder der durch den Aktor erzeugten Kraft berücksichtigt werden können.

In einer Weiterbildung der Erfindung könnte vorgesehen sein, dass an den an einem Träger montierten Arbeitswerkzeugen mehrere Messmittel angebracht bzw. vorgesehen sind, insbesondere kann an jedem Arbeitswerkzeug zumindest ein Messmittel vorgesehen sein. Auch könnte vorgesehen sein, dass jeweils zumindest ein Messmittel an einem kurzen Arbeitswerkzeug und zumindest ein Messmittel an einem langen Arbeitswerkzeug vorhanden ist, um somit eine noch genauere Einstellung der Auflagedrücke zu erreichen, wobei jedoch gemäß der oben ausgeführten Beschreibungen durch den gemeinsamen Träger auch bereits mit einem Messmittel ein ausreichendes Arbeitsergebnis erzielt werden kann.

Das zumindest eine Messmittel kann bspw. an einem Rahmen des Arbeitswerkzeugs angebracht sein und bspw. die durch den Auflagedruck am Arbeitswerkzeug hervorgerufene Verformung ermitteln, wobei dies bspw. mittels Sensoren erfolgt, welche nach dem Prinzip der Wegmessung oder nach dem Prinzip der Widerstandsmessung arbeiten. Insbesondere kommen hierbei bspw. Dehnungsmessstreifen zum Einsatz. Auch Messmittel, die nach anderen Messprinzipien arbeiten, wären denkbar. Auch optische Messmittel könnten eingesetzt werden, insbesondere zur Ermittlung der Arbeitstiefe. Auch könnte das zumindest eine Messmittel in den Lagerungen und/oder Drehpunkten der am Arbeitswerkzeug angebrachten Werkzeuge angebracht sein. Auch wären hier sogenannte Messbolzen einsetzbar.

In einer Weiterbildung könnte zudem vorgesehen sein, dass die jeweiligen Auflagedrücke mit Hilfe einer Winkelerfassung und/oder einer Positionserkennung des Trägers und/oder des Aktors erfolgt, wobei hierbei insbesondere die in der Regelungseinrichtung bzw. im Steuerungsprogramm hinterlegten Kennlinien und/oder Kennwerte der Lagerelemente verwendet werden könnten. So dass bspw. auf Basis einer aktuellen Winkelposition und einem entsprechenden Kennwert und/oder einer entsprechenden Kennlinie der Lagerelemente auf einen Auflagedruck zurückgeschlossen werden kann. Ebenso kann entsprechend mit der aktuellen Länge bzw. Position des Aktors verfahren werden, so dass wiederum auf Basis einer aktuellen Position des Aktors und einen entsprechenden Kennwert und/oder einer entsprechenden Kennlinien der Lagerelemente auf einen Auflagedruck geschlossen werden kann.

Ebenso könnte auch mit einer durch den Aktor erzeugten Kraft verfahren werden, so dass bspw. auf Basis einer aktuellen durch den Aktor hervorgerufen Kraft und einem entsprechenden Kennwert und/oder einer entsprechenden Kennlinie der Lagerelemente auf einen Auflagedruck zurückgeschlossen werden kann.

Darüber hinaus kann vorgesehen sein, dass der Aktor mit einem Wegmesssystem ausgeführt ist, oder dem Aktor ein Positionserkennungssystem zugeordnet oder in diesem integriert ist.

Da in Abhängigkeit des jeweiligen Auflagedrucks und/oder der jeweiligen Arbeitstiefe bzw. in Abhängigkeit der Größe der durch die Lagerelemente erzeugten Momente auch der jeweilige Ausfederweg der Arbeitswerkzeuge verringert werden kann, kann erfindungsgemäß zudem vorgesehen sein, dass der jeweilige maximale Auflagedruck und/oder die maximale Arbeitstiefe jeweils begrenzt werden, um somit noch einen ausreichenden Ausfederweg der Arbeitswerkzeuge zu gewährleisten. So kann bspw. vorgesehen sein, dass der Träger nur bis zu einem definierten Winkel verschwenkt werden kann, oder dass der Aktor einen entsprechend begrenzten Verfahrweg und/oder eine begrenzte erzeugte Kraft aufweist, wobei diese Positionen, Stellungen und Kräfte insbesondere derartig definiert sein können, dass der Ausfederweg des Arbeitswerkzeuges größer oder gleich ist als die aktuelle Arbeitstiefe des Arbeitswerkzeuges. Auch können mittels des Steuerungsprogramms wiederum Kennlinien und/oder Kennwerte herangezogen werden, die eine Angabe ermöglichen, welches maximale Moment die jeweiligen Lagerelemente erzeugen können bzw. bis zu welchem Moment die Lagerelemente jeweils elastisch verformbar bleiben. In Abhängigkeit dieser elastischen Verformbarkeit bzw. in Abhängigkeit dieses Moments kann wiederum ein Maximalwert für die Arbeitstiefe und/oder den Auflagedruck definiert sein.

Insofern somit nicht die gewünschte Arbeitstiefe und/oder der gewünschte Auflagedruck erreicht werden kann, kann zudem vorgesehen sein, dass mittels der Regelungseinrichtung oder mittels einer mit der Rechnereinheit verbundenen Ausgabeeinrichtung bspw. ein akustisches und/oder optisches Signal ausgegeben wird.

Zudem könnte vorgesehen sein, die jeweils auf den Aktor wirkende Kraft zu ermitteln, wobei auch wiederum diese Kraft im Steuerungsprogramm entsprechend mit ausgewertet werden kann. Die Ermittlung der Kraft des Aktors kann bspw. mittels eines Drucksensors oder eines Kraftsensors erfolgen. Auch denkbar wäre eine rechnerische Auswertung der Kraft auf Basis bspw. eines vorhandenen Öldrucks und/oder eines vorhandenen Volumenstroms und einer entsprechenden Kolbenfläche eines pneumatisch oder hydraulisch angetriebenen Aktors. Ebenso könnte bei einem elektrischen Aktor die jeweilige Kraft auf Basis von dessen Stromaufnahme oder auf Basis von dessen Drehmoment ermittelt werden.

In einer weiteren Ausführungsvariante könnte vorgesehen sein, dass die Sektionen bzw. das auch die Träger in deren Höhe, d. h. in deren Abstand zur Bodenoberfläche verstellbar sind, wobei hierfür wiederum entsprechende Aktoren vorgesehen sein können. Auch könnte der Lagerflansch oder das Rahmenelement, an dem der Träger montiert wird, drehbar und/oder in dessen Höhe verstellbar an der landwirtschaftlichen Maschine angebaut sein. So könnte bspw. in Abhängigkeit des ermittelten Auflagedrucks und/oder der ermittelten Arbeitstiefe auch die Höhe des Trägers verstellt werden. Kann bspw. durch eine Winkeländerung des Trägers kein Mindestwert des Auflagedrucks und/oder der Arbeitstiefe erreicht werden, so lässt dies bspw. drauf schließen, dass der Träger zu tief geführt wird und dieser in dessen Höhe verstellt werden muss. Auf Basis dieser Angabe kann anschließend bspw. die Höhe des Trägers automatisiert mittels eines Aktors oder manuell entsprechend angepasst werden.

Auch könnte eine Verstellung des Auflagedrucks und/oder der Arbeitstiefe in Abhängigkeit der aktuellen Position der landwirtschaftlichen Maschine erfolgen, wobei hierfür die landwirtschaftliche Maschine bzw. deren Regelungseinrichtung mit einem GPS-System bzw. mit einem Positionserkennungssystem in Verbindung stehen oder mit einem derartigen ausgestattet sein kann. Auch können Feldkarten oder Schlagkarteikarten im Steuerungsprogramm hinterlegt sein bzw. kann die Regelungseinrichtung mit entsprechenden Datenbanken in Verbindung stehen. Auf Basis der jeweiligen Position der landwirtschaftlichen Maschine kann eine entsprechende Erhöhung oder Verringerung des Auflagedrucks und/oder der Arbeitstiefe erfolgen.

In einer weiteren Ausführungsvariante kann zudem vorgesehen sein, dass die jeweiligen Sektionen jeweils unabhängig voneinander ausgehoben oder abgesenkt werden können, sowie dass deren Arbeitstiefe und/oder deren Auflagedruck jeweils unabhängig voneinander variiert und verstellt werden können. So kann vorgesehen sein, dass bspw. bei der Ausführung der Arbeitswerkzeuge als Säschar, diese bspw. dann entsprechend ausgehoben werden, wenn eine Versorgung dieser mittels landwirtschaftlichen Verteilguts unterbrochen wird.

In einer weiteren Ausführungsvariante könnte zudem bspw. vorgesehen sein, dass der Aktor jeweils auf einen definierten Differenzdruck bzw. auf eine definierte Differenzkraft geregelt wird. So könnte vorgesehen sein, dass bspw. bei einem als doppeltwirkenden Zylinder ausgeführten Aktor zwischen Kolbenboden- und Kolbenstangenseite jeweils variabel veränderbare Drücke erzeugt werden können, wodurch wiederum die durch den Aktor erzeugte Kraft verändert werden kann. In Abhängigkeit des mittels der Messmittel erfassten Auflagedrucks und/oder der Arbeitstiefe kann anschließend ein definiertes Druck- bzw. Kräftegleichgewicht oder ein definierte Druck- bzw. Kräfteungleichgewicht erzeugt werden, wobei dies bspw. mittels Drucksensorik überwacht und Proportionalventilen eingestellt werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:

Figur 1A     eine Perspektivansicht einer landwirtschaftlichen Maschine, mit an dessen hinterem Ende über eine Parallelogrammanordnung gelagerten als Säschare ausgebildeten Arbeitswerkzeugen.

Figur 1B     eine Seitenansicht der landwirtschaftlichen Maschine gemäß der Figur 1A, mit mittels einer Parallelogrammanordnung gelagerten, die Arbeitswerkzeuge bildenden Säscharen und einem den Winkel des Trägers verändernden Aktor in Form eines hydraulisch oder pneumatisch arbeitenden Zylinders.

Figur 2     eine Seitenansicht einer landwirtschaftlichen Maschine in Form einer Sämaschine, wobei diese als Arbeitswerkzeuge zum einen in zwei Reihen zueinander angeordnete Schneidscheiben und zum anderen Säschare aufweist.

Figur 3A     eine Perspektivansicht mehrerer an einem gemeinsamen Träger montierter und jeweils Säschare bildender Arbeitswerkzeuge, welche jeweils mittels eines den Auflagedruck und/oder die Arbeitstiefe definierenden Aktors verschwenkt werden können.

Figur 3B     ein Blockschaltbild des Regelungssystems und die Wirkzusammenhänge zwischen Arbeitswerkzeug - Träger und Aktor.

Figur 4     ein Kurvendiagramm, welches jeweils die Kennlinien zweier verschiedener Lagerelemente darstellt.

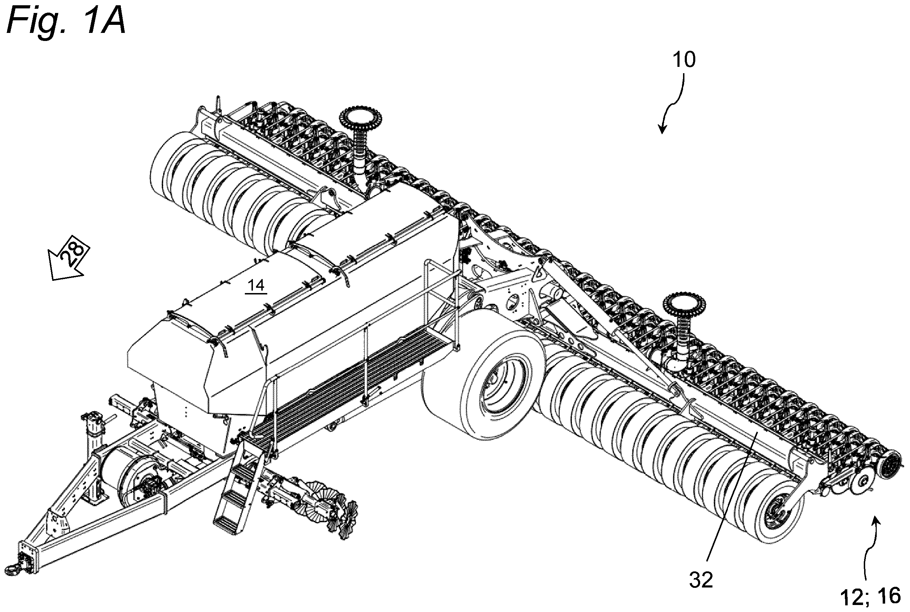

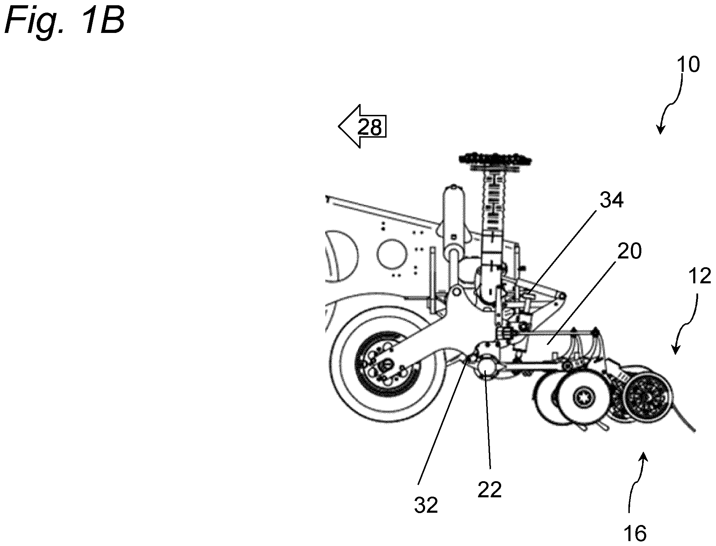

Für gleiche oder gleich wirkende Elemente der Erfindung werden in den Figuren 1 bis 4 jeweils identische Bezugszeichen verwendet. Ferner werden der besseren Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Regelungssystem, die erfindungsgemäße landwirtschaftliche Maschine oder das erfindungsgemäße Verfahren ausgestaltet sein können und stellen keine abschließende Begrenzung dar.

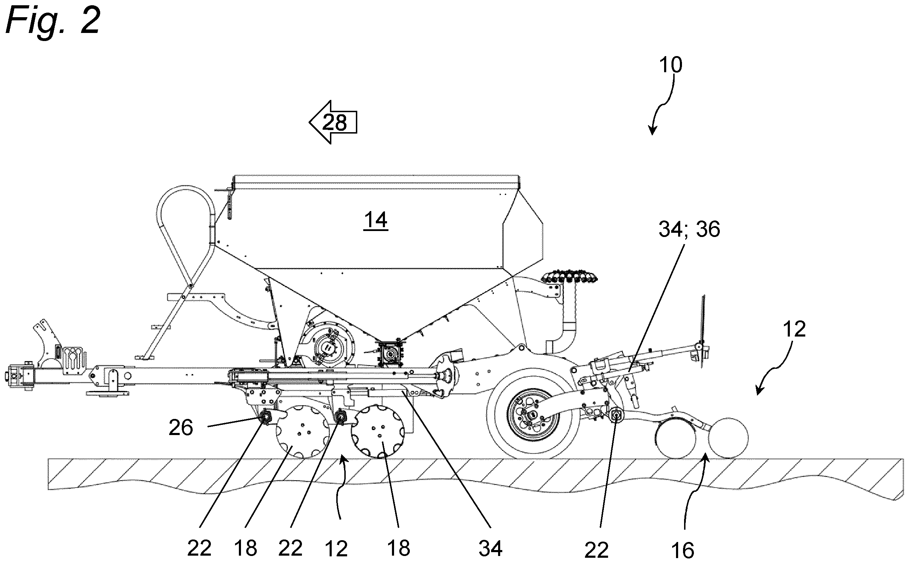

Aus den Figuren 1 und 2 gehen jeweils Ausführungsbeispiele landwirtschaftlicher Maschinen 10 hervor, in welchen jeweils Arbeitswerkzeuge 12 angebaut sind. Gezeigt sind hierbei als Sämaschinen ausgeführte landwirtschaftliche Maschinen 10. Die landwirtschaftlichen Maschinen 10 weisen einen Vorratstank 14 zum Mitführen von zumindest einem oder mehreren landwirtschaftlichen Verteilgütern wie Saatgut, Dünger oder dergleichen auf. Zum Ausbringen dieser landwirtschaftlichen Verteilgüter auf einer Ackerfläche, sind den Maschinen 10 jeweils als Säschare 16 ausgebildete Arbeitswerkzeuge 12 zugeordnet. Zudem sind der Maschine 10 gemäß der Figur 2 zusätzlich zur Lockerung der Ackerfläche noch in zwei Reihen verteilte als Schneidscheiben 18 ausgebildete Arbeitswerkzeuge 12 zugeordnet. Die Säschare 16 gemäß der Figuren 1 sind hierbei mittels eines Parallelogramms 20 bzw. mittels einer Parallelogrammanordnung schwenkbar an der landwirtschaftlichen Maschine 10 montiert, wobei sich das Parallelogramm 20 aus einer oberen und einer unteren Schwinge zusammensetzt und wobei die untere Schwinge mittels elastischen Lagerelementen an einem Träger 22 angebracht ist. Zudem sind die Säschare 16 bzw. die als Schneidscheiben 18 gebildeten Arbeitswerkzeuge 12 der Figur 2 jeweils schwenkbar an einem Träger 22 montiert.

Neben den in den Ausführungsbeispielen genannten Sämaschinen ist das erfindungsgemäße Regelungssystemen oder das erfindungsgemäße Verfahren darüber hinaus noch bei anderen landwirtschaftlichen Maschinen und Arbeitsgeräten wie bspw. Bodenbearbeitungsgeräten einsetzbar bzw. verwendbar, wobei dieses insbesondere bei Sämaschinen und Verteilmaschinen Verwendung findet, da bei derartigen Maschinen eine nicht konstante Arbeitstiefe und/oder ein nicht konstanter Auflagedruck jeweils die größten negativen Auswirkungen aufweist.

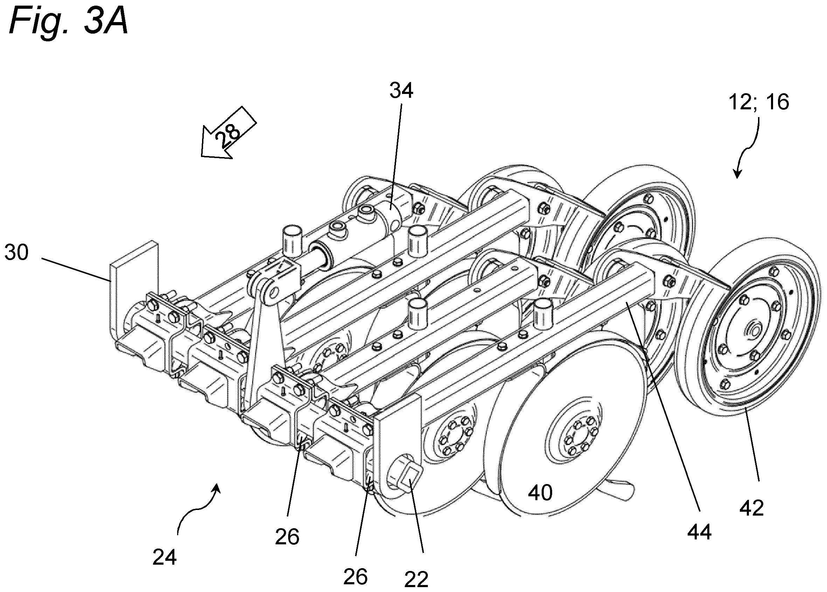

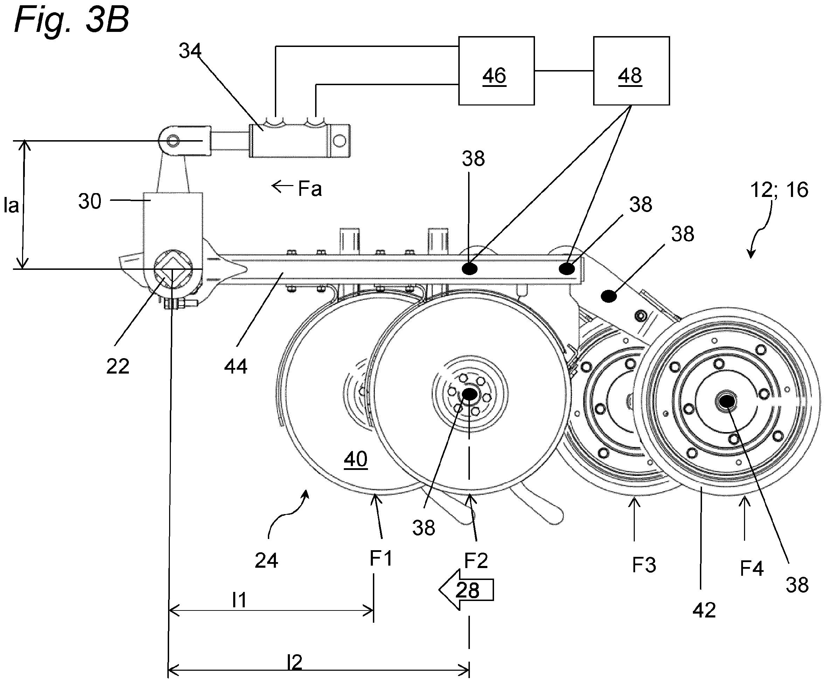

Weitere Details der Erfindung bzw. des Regelungssystems gehen zudem noch aus den Figuren 3 hervor, wobei in einer Perspektivansicht und einer Seitenansicht jeweils mehrere an einem gemeinsamen Träger 22 angeordnete als Säschare 16 ausgebildete Arbeitswerkzeuge 12 abgebildet sind. Die in den Figuren 3 jeweils abgebildeten Sektionen 24 von Säscharen 16 könnten bspw. in den in den Figuren 1 und 2 abgebildeten Maschinen 10 eingebaut sein, wobei in den Maschinen auch eine Mehrzahl derartiger Sektionen 24 eingebaut sein können.

Zudem zeigt die Figur 3B noch ein Blockschaltbild der jeweils für das erfindungsgemäße Regelungssystem benötigten Bauteile bzw. Komponenten und deren Wirkzusammenhänge.

Gemäß den Ausführungsbeispielen sind zunächst jeweils eine Mehrzahl von Arbeitswerkzeugen 12 bspw. in Form von Säscharen 16 oder Schneidscheiben 18 an einem gemeinsamen Träger 22 angebaut. Durch den gemeinsamen Träger 22 werden somit die an diesem montieren Arbeitswerkzeuge 12 jeweils mechanisch gekoppelt, wodurch eine Bewegung des Trägers 22 jeweils auf alle an diesem angebauten Arbeitswerkzeuge zumindest weitgehend synchron übertragen wird, ohne hierfür zusätzliche Komponenten oder Bauteile zu benötigen. Gemäß den Ausführungsbeispielen ist der Träger 22 als Profilrohr ausgebildet, wobei der Träger 22 auch anders ausgeführt sein kann.

Die Arbeitswerkzeuge 12 sind jeweils mittels elastischen Lagerelementen 26 am Träger 22 gelagert, wobei hierfür bspw. Elastomerlager zwischen den aus einer Lagerschale des Arbeitswerkzeuges 22 und dem Träger 22 ausgebildeten Hohlräumen bzw. Freiräumen eingelegt sind. Die Lagerelemente 26 könnten jedoch auch anders ausgebildet sein. Bspw. wäre es auch denkbar, dass diese nicht aus einzelnen "Schnüren" gebildet sind, sondern, dass bspw. jeweils zumindest zwei Hohlräume mit einem gemeinsamen Lagerelement verbunden werden. Auch könnten die vier Hohlräume mit einem Lagerelement verbunden werden. Zudem wäre es denkbar, dass nicht vier, sondern bspw. nur zwei oder drei Hohlräume an der Lagerstelle vorhanden sind. Aber auch das vier oder mehr Hohlräume an der Lagerstelle vorhanden sind.

Mittels der elastischen Lagerelemente 26 kann jeweils erreicht werden, dass die Arbeitswerkzeuge 12, bspw. beim Auftreffen auf Hindernissen und Steinen unabhängig voneinander ausweichen können, der Auflagedruck der restlichen, nicht ausweichenden Arbeitswerkzeuge 12 hiervon jedoch weitgehend unverändert bleibt, was zudem durch die mechanische Koppelung noch weiter verbessert wird.

Mittels der elastischen Lagerelemente 26 wird zudem eine Vorspannkraft erzeugt, welche jeweils bspw. von den Materialien dieser und deren Shore-Härte abhängig sein kann. Auch kann die Vorspannkraft durch die geometrischen Eigenschaften der Lagerelemente 26 definiert werden, bspw. durch deren Form und deren Länge bzw. Größe.

Der gemeinsame Träger 22 ist zudem drehbar an einem eine insbesondere quer zur Fahrrichtung 28 orientierte Drehachse bildenden Lagerflansch 30 gelagert. Der Lagerflansch 30 kann hierbei insbesondere an einem Rahmenelement 32 der landwirtschaftlichen Maschine 10 montiert sein oder Bestandteil des Rahmenelements 32 sein. Der Träger 22 kann zudem mittels eines Aktors 34 um die Drehachse entsprechend verschwenkt werden, wodurch der Auflagedruck und/oder die Arbeitstiefe entsprechend vergrößert oder verkleinert werden können.

Gemäß der Figuren 1 und 3 ist der Aktor 34 jeweils als Zylinder ausgeführt, welcher insbesondere hydraulisch angetrieben wird. Es wäre jedoch auch denkbar, diesen pneumatisch anzutreiben. Auch andere Ausführungsvarianten von Aktoren 34 wären denkbar, bspw. auch elektrisch betriebene. Zudem wären neben den gezeigten Linear - Aktoren auch Drehantriebe denkbar. Auch wäre es denkbar, den Aktor 34 mechanisch bzw. manuell zu verstellen. In einer derartigen Ausführung könnte der Aktor 34 bspw. als mechanische Kurbel 36 ausgeführt sein (vergl. Figur 2), wobei jedoch automatisierte Aktoren 34 bevorzugt verwendet werden.

Zudem sind zur Erfassung des tatsächlich am Arbeitswerkzeug 12 vorhandenen Auflagedrucks Messmittel 38 vorgesehen. Die Messmittel 38 können gemäß der Figur 3B an verschiedensten Stellen des Arbeitswerkzeugs angebracht sein, bspw. an den Lager- und Drehpunkten der Werkzeuge der Arbeitswerkzeuge 12 wie bspw. deren Sechs-scheiben 40 oder deren Druckrollen 42 oder an verschiedensten Stellen des Rahmens 44 des Arbeitswerkzeuges 12. Dabei wird in Abhängigkeit des Abstandes bzw. des somit entstehenden Hebelarms zwischen der Drehachse und dem Messmittel jeweils ermittelt, welcher Auflagedruck auf die Sechscheibe 40 oder die Druckrolle 42 wirkt, je nachdem welche Komponente des Arbeitswerkzeuges 12 man entsprechend auswerten möchte.

Gemäß der Ausführungsbeispiele sind jeweils nur einem, der mehreren an einem gemeinsamen Träger 22 angebrachten Arbeitswerkzeuge 12 Messmittel 38 zugeordnet, wobei es auch denkbar wäre, zwei oder mehr oder auch allen Arbeitswerkzeugen 12 entsprechende Messmittel 38 zuzuordnen.

Auch könnte neben dem Auflagedruck jeweils die Arbeitstiefe mittels entsprechender Messmittel 38 ermittelt werden.

Die Ansteuerung des Aktors 34 kann bspw. mittels eines elektrischen und/oder pneumatischen und/oder hydraulischen Ventils 46 erfolgen, welches wiederum mittels einer Rechnereinheit 48 bzw. mittels einer Regelungseinheit 48 angesteuert wird. In der Rechnereinheit 48 werden zudem die mittels der Messmittel 38 erfassten Werte verarbeitet bzw. ausgewertet. Hierfür ist in der Rechnereinheit 48 ein Steuerungsprogramm vorgesehen, mittels welchem die Ist- und die Soll- Auflagedrücke und/oder Arbeitstiefen entsprechend ausgewertet werden und anschließend der jeweilige Aktor 34 die Auflagedrücke und/oder Arbeitstiefen entsprechend erhöht oder verringert.

Die Ansteuerung des Aktors 34 kann hierbei unter Berücksichtigung verschiedenster Parameter oder Regelungsgrößen erfolgen. So kann zunächst berücksichtigt werden, wie viele Arbeitswerkzeuge 12 an einem gemeinsamen Träger 12 montiert werden und an wie vielen Arbeitswerkzeugen 12 jeweils Messmittel 38 angebracht sind. Zudem können die jeweiligen Hebellängen zwischen der Drehachse und dem Messmittel 38 sowie zwischen der gewünschten Position des Auflagedrucks und der Drehachse ermittelt bzw. diese Differenz entsprechend berechnet werden. Des Weiteren kann eine Auswertung erfolgen bezüglich der vorhandenen elastischen Lagerelemente 26 und deren Eigenschaften bzw. deren Vorspannkräften, sowie ob diese an allen, am gemeinsamen Träger 22 angebauten Arbeitswerkzeugen 12 identisch sind. Zudem kann berücksichtigt werden, ob alle Arbeitswerkzeuge 12 gleich ausgeführt sind, oder ob diese bspw. unterschiedliche Längen aufweisen. Bei Arbeitswerkzeugen 12 mit unterschiedlichen Längen kann insbesondere vorgesehen sein, dass die Vorspannkraft der elastischen Lagerelemente 26 jeweils auf die Länge der Arbeitswerkzeuge 12 angepasst wird. So sind gemäß der Figur 3A die elastischen Lagerelementen 26 an den langen Arbeitswerkzeugen 12 bzw. Säscharen 16 jeweils länger bzw. breiter als die an den kurzen Säscharen 16, wodurch wiederum bei Veränderung des Auflagedrucks mittels des Aktors 34 an allen Säscharen 16, insbesondere an deren Sechscheiben 40 oder Druckrollen 42 die gleichen Auflagekräfte anliegen.

Als weitere Regelungsgrößen können zudem beispielsweise die mittels des Aktors 34 hervorgerufenen Kräfte ermittelt werden, was bspw. mittels des Querschnitts des Aktors 34 erfolgen kann. Auch kann die Hebellänge des Angriffspunkts des Aktors 34 in Bezug auf die Drehachse entsprechend mit berücksichtigt werden.

Gemäß der Figuren 3 weisen die Arbeitswerkzeuge 12 unterschiedliche Längen auf, was den Vorteil hat, dass diese auch bei Ackerflächen eingesetzt werden können, auf welchen große Mengen an Ernterückständen vorhanden sind. Gemäß der Figur 3B sind für eine derartige Ausführungsform auch deren mathematischen Zusammenhänge ersichtlich. So können folgende Zusammenhänge festgehalten werden.

$$Mges \equiv Fa \times la \equiv (M1 + M1n....) + (M2 + M2n....)$$

Hierbei bedeuten:

$Mges$ =     Durch Lagerelemente erzeugte Moment

$Fa$     Durch Aktor erzeugte Kraft

$la$ =     Hebelarm zwischen Aktor und Drehachse des Trägers

$M1$ =     Auf das kurze Arbeitswerkzeug wirkendes Moment, berechnet durch das Produkt aus:

$$F1 \times l1$$

wobei wiederum folgendes definiert ist:

$F$1 = Auflagedruck des Arbeitswerkzeugs bzw. des Werkzeuges des kurzen Arbeitswerkzeugs

$l$1 = Hebelarm zwischen Drehachse des Trägers und Auflagepunkt des Werkzeuges des Arbeitswerkzeugs

$M$1$n$.... = Momente entsprechend der Anzahl an kurzen Arbeitswerkzeugen, welches gemäß $M$1 berechnet wird

M2 = Auf das Arbeitswerkzeug wirkendes Moment, berechnet durch das Produkt aus:

$$F2 \times l2$$

wobei wiederum folgendes definiert ist:

$F$2 = Auflagedruck des Arbeitswerkzeuges bzw. des Werkzeuges des langen Arbeitswerkzeugs

$l$2 = Hebelarm zwischen Drehachse des Trägers und Auflagepunkt des Werkzeuges des Arbeitswerkzeugs

$M$ 2$n$.... Momente entsprechend der Anzahl an langen Arbeitswerkzeugen, welches gemäß $M$2 berechnet wird

Neben den Kräften F1 und F2 an den Sechscheiben 40 wäre es darüber hinaus auch denkbar, die jeweiligen Auflagekräfte F3 und F4 an den Druckrollen 42 zu ermitteln bzw. zu überwachen.

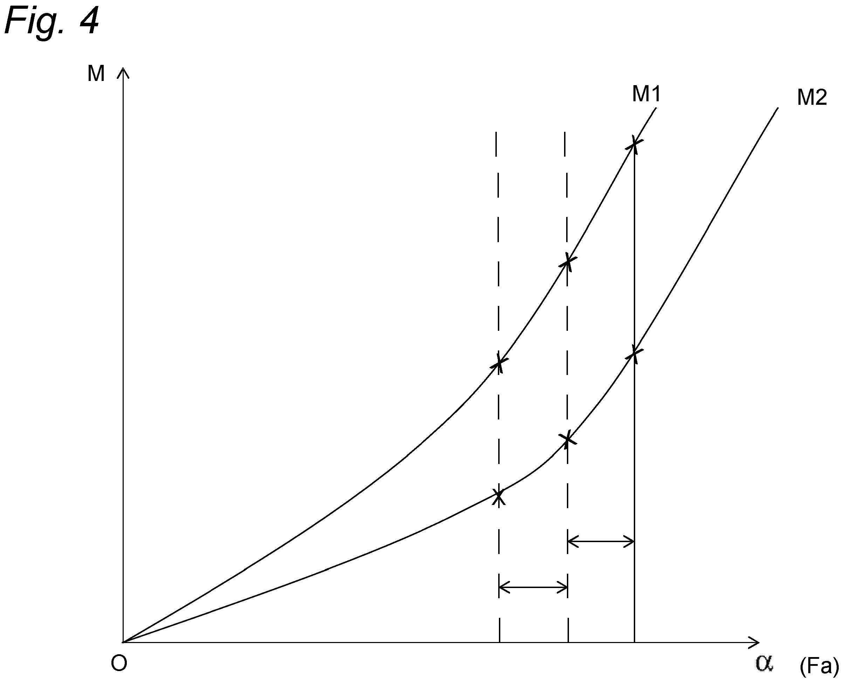

Aus dem Kurvendiagramm der Figur 4 gehen darüber hinaus noch zwei Kennlinien verschiedener Lagerelemente hervor, wie sie bspw. in vorliegender Erfindung verwendet werden können, wobei hierbei zunächst waagerechte Achse die Winkelveränderung α des Trägers 22 bzw. die Winkelveränderung zwischen Träger 22 und Arbeitswerkzeug 12 darstellt, d. h. eine Vergrößerung des Winkels α entspricht hierbei nicht einer Vergrößerung des Winkels zwischen Träger 22 und Ackerfläche.

Neben einer Darstellung des Winkels α könnte das Diagramm auch verwendet werden, um bspw. die jeweilige Momentveränderung in Bezug auf eine Veränderung der durch den Aktor erzeugten Kraft Fa erfolgen. Die senkrechte Achse gibt hierbei jeweils an, wie sich das durch die Lagerelemente 26 erzeugte Moment M entsprechend verändert.

Zudem zeigen jeweils zwei Kurven die jeweilige Momentzunahme der Lagerelemente 26 in Bezug auf eine Winkelveränderung α (Kraftveränderung Fa) an. D. h. so ist zunächst ein Moment M1 angegeben, welches Moment M1 bspw. den Lagerelementen 26 entspricht, wie sie bspw. bei kurzen Arbeitswerkzeugen 12 Verwendung finden kann. Darüber hinaus ist ein zweites Moment M2 angegeben, welches bspw. der Kennlinie 54 entspricht, wie sie durch ein Lagerelement 26 erzeugt werden kann, welches bspw. in einem langen Arbeitswerkzeug 12 Verwendung findet.

Wie aus dem Diagramm zu sehen ist, sind die Kennlinien 54 nicht linear, was bedeutet, dass sich das Moment M1 und M2 nicht proportional zur Winkelveränderung α (Kraftveränderung Fa) erhöht.

Zudem sind im Diagramm zwei zusätzliche Achsen 56 eingezeichnet, welche jeweils Veränderungen des Auflagedrucks durch eine Winkelveränderung α (Kraftveränderung Fa) darstellen sollen. Wie durch die Achsen 56 und deren Schnittpunkte mit den Kennlinien 54 zu entnehmen ist, findet durch eine Winkelveränderung keine proportionale Zunahme der Momente M1 und M2 statt, wobei wiederum diese Wirkzusammenhänge mittels eines in einer Regelungseinrichtung 48 hinterlegten Steuerungsprogramms entsprechend mit berücksichtigt werden können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

**Bezugszeichenliste**

10    Landwirtschaftliche Maschine
12    Arbeitswerkzeug
14    Vorratstank
16    Säschar
18    Schneidscheibe

| | |
|---|---|
| 20 | Parallelogramm |
| 22 | Träger |
| 24 | Sektion |
| 26 | Lagerelement |
| 28 | Fahrtrichtung |
| 30 | Lagerflansch |
| 32 | Rahmenelement |
| 34 | Aktor |
| 36 | Kurbel |
| 38 | Messmittel |
| 40 | Sechscheibe |
| 42 | Druckrolle |
| 44 | Rahmen |
| 46 | Ventil |
| 48 | Rechnereinheit; Regelungseinrichtung |
| 50 | Achse Winkelveränderung $\alpha$ |
| 52 | Achse Momentzunahme |
| 54 | Kennlinie Lagerelement |
| 56 | Achse Veränderung Auflagedruck |

| | |
|---|---|
| Fa | Durch Aktor erzeugte Kraft |
| F1 | Auflagedruck kurzes Arbeitswerkzeug |
| F2 | Auflagedruck langes Arbeitswerkzeug |
| F3 | Auflagedruck Druckrolle kurzes Arbeitswerkzeug |
| F4 | Auflagedruck Druckrolle langes Arbeitswerkzeug |
| Ia | Hebelarm zwischen Aktor und Drehachse des Trägers |
| I1 | Hebelarm zwischen Drehachse des Trägers und Auflagepunkt des Werkzeuges des kurzen Arbeitswerkzeuges |
| I2 | Hebelarm zwischen Drehachse des Trägers und Auflagepunkt des Werkzeuges des langen Arbeitswerkzeuges |
| M | Durch Lagerelemente erzeugtes Moment |
| M1 | Moment der Lagerelemente des kurzen Arbeitswerkzeugs |
| M2 | Moment der Lagerelemente des langen Arbeitswerkzeugs |

**Patentansprüche**

1. Regelungssystem für landwirtschaftliche Arbeitswerkzeuge (12), wie Säschare, Schneidscheiben, Walzen oder dergl., wobei wenigstens zwei derartige Arbeitswerkzeuge (12) jeweils mittels elastischer Lagerelemente (26) schwenkbar an einem Träger (22) montiert sind, welcher Träger (22) mittels eines Aktors (34) schwenkbar an einem Lagerflansch (30) oder einem Rahmenelement (32) einer landwirtschaftlichen Maschine (10) montiert oder angebaut ist, wobei mittels des Aktors (34) die jeweilige Winkelposition des Trägers (22) in Bezug auf eine Ackerfläche variabel veränderbar ist, wodurch der Auflagedruck und/oder die Arbeitsiefe der Arbeitswerkzeuge (12) veränderbar ist, wobei zur Messung des Auflagedrucks und/oder der Arbeitsiefe zumindest einem Arbeitswerkzeug (12) und/oder dem Träger (22) ein Messmittel (38) zugeordnet ist,
**dadurch gekennzeichnet, dass** der Aktor (34) auf Basis des mittels des zumindest einen Messmittels (38) ermittelten Auflagedrucks und/oder der ermittelten Arbeitsiefe und der Anzahl der an dem gemeinsamen Träger (22) montierten Arbeitswerkzeuge (12) ansteuerbar ist oder angesteuert wird.

2. Regelungssystem nach Anspruch 1, **dadurch gekennzeichnet, dass** die elastischen Lagerelemente (26) aus Elastomer gefertigt sind.

3. Regelungssystem nach Anspruch 1 oder 2, **dadurch gekennzeichnet, dass** die mittels elastischer Lagerelemente (26) gelagerten Arbeitswerkzeuge (12) unabhängig voneinander bei Auftreffen auf Hindernissen ausweichen können.

4. Regelungssystem nach einem der vorhergehenden Ansprüche, **dadurch gekennzeichnet, dass** eine Veränderung des Auflagedrucks und/oder der Arbeitsiefe durch eine Längenänderung des Aktors (34) und/oder durch eine Winkeländerung des Trägers (22) und/oder durch eine Differenzdruck- und/oder Differenzkraftregelung des Aktors erfolgt.

**5.** Regelungssystem nach einem der vorhergehenden Ansprüche, **dadurch gekennzeichnet, dass** eine Auswertung der erforderlichen Veränderung des Auflagedrucks und/oder der Arbeitstiefe mittels eines in einer Regelungseinrichtung (48) hinterlegten Steuerungsprogramms erfolgt.

**6.** Regelungssystem nach einem der vorhergehenden Ansprüche, **dadurch gekennzeichnet, dass** eine Auswertung der erforderlichen Veränderung des Auflagedrucks und/oder der Arbeitstiefe unter Berücksichtigung einer Kennlinie (54) und/oder von Kennwerten der Lagerelemente (26) erfolgt.

**7.** Regelungssystem nach einem der vorhergehenden Ansprüche, **dadurch gekennzeichnet, dass** an einem Träger (22) verschieden lange Arbeitswerkzeuge (12) angebracht sind.

**8.** Regelungssystem nach Anspruch 7, **dadurch gekennzeichnet, dass** die Lagerelemente (26) der Arbeitswerkzeuge (12) derartig ausgewählt sind, dass eine Winkeländerung des Trägers (22) jeweils eine zumindest weitgehend gleiche Veränderung des Auflagedrucks hervorruft.

**9.** Regelungssystem nach zumindest einem der vorhergehenden Ansprüche, **dadurch gekennzeichnet, dass** mittels diesem eine Verschleißüberwachung der Lagerelemente (26) erfolgt.

**10.** Regelungssystem nach zumindest einem der vorhergehenden Ansprüche, **dadurch gekennzeichnet, dass** der maximale Auflagedruck und/oder die maximale Arbeitstiefe in Abhängigkeit einer Arbeitstiefe des Arbeitswerkzeuges (12) definiert ist.

**11.** Regelungssystem nach zumindest einem der vorhergehenden Ansprüche, **dadurch gekennzeichnet, dass** der Träger (22) höhenverstellbar an der landwirtschaftlichen Maschine (10) angebracht ist.

**12.** Landwirtschaftliche Maschine (10) zur Bodenbearbeitung und/oder zur Aussaat mit einer Mehrzahl von Arbeitswerkzeugen (12) und mit einem Regelungssystem nach einem der vorhergehenden Ansprüche 1 bis 11.

**13.** Landwirtschaftliche Maschine nach Anspruch 12, **dadurch gekennzeichnet, dass** eine Sektion sich aus zumindest zwei Arbeitswerkzeugen (12), einem Träger (22) und einem Aktor (34) zusammensetzt, wobei wiederum zumindest zwei derartige Sektionen an der landwirtschaftlichen Maschine (10) angebaut sind, und wobei die wenigstens zwei Sektionen unabhängig voneinander ansteuerbar sind.

**14.** Verfahren zur Regelung des Auflagedrucks und/oder der Arbeitstiefe von landwirtschaftlichen Arbeitswerkzeugen (12), wie Säschare, Schneidscheiben, Walzen oder dergleichen, wobei zumindest zwei Arbeitswerkzeuge (12) mittels elastischer Lagerelementen (26) schwenkbar an einem Träger (22) montiert sind, welcher Träger (22) mittels eines Aktors (34) schwenkbar an einem Lagerflansch (30) oder einem Rahmenelement (32) einer landwirtschaftlichen Maschine (10) montiert oder angebaut wird, wobei mittels des Aktors (34) die jeweilige Winkelposition des Trägers (22) in Bezug auf eine Ackerfläche variabel veränderbar ist, wodurch der Auflagedruck und/oder die Arbeitstiefe der Arbeitswerkzeuge (12) veränderbar ist, wobei zur Messung des Auflagedrucks und/oder der Arbeitstiefe zumindest einem Arbeitswerkzeug (12) und/oder dem Träger (22) ein Messmittel (38) zugeordnet ist, **gekennzeichnet durch** eine Ansteuerung des Aktors (34) auf Basis des mittels des Messmittels (38) ermittelten Auflagedrucks und/oder der ermittelten Arbeitstiefe und der Anzahl der an dem gemeinsamen Träger (22) montierten Arbeitswerkzeuge (12).

**15.** Verfahren nach Anspruch 14, **dadurch gekennzeichnet, dass** eine Veränderung des Auflagedrucks und/oder der Arbeitstiefe durch eine Längenänderung des Aktors (34) und/oder durch eine Winkeländerung des Trägers (22) und/oder durch eine Differenzdruck- und/oder Differenzkraftregelung des Aktors erfolgt.

**16.** Verfahren nach Anspruch 14 oder 15, **dadurch gekennzeichnet, dass** eine Auswertung der erforderlichen Veränderung des Auflagedrucks und/oder der Arbeitstiefe mittels eines in einer Regeleinrichtung hinterlegten Steuerungsprogramms erfolgt.

**17.** Verfahren nach einem der Ansprüche 14 bis 16, **dadurch gekennzeichnet, dass** eine Auswertung der erforderlichen Veränderung des Auflagedrucks und/oder der Arbeitstiefe unter Berücksichtigung einer Kennlinie (54) und/oder von Kennwerten der Lagerelemente (26) erfolgt.

**18.** Verfahren nach einem der Ansprüche 14 bis 17, **dadurch gekennzeichnet, dass** der maximale Auflagedruck und/oder die maximale Arbeitstiefe in Abhängigkeit einer Arbeitstiefe des Arbeitswerkzeuges (12) definiert ist.

19. Verfahren nach einem der Ansprüche 14 bis 18, **dadurch gekennzeichnet, dass** der Träger (22) höhenverstellbar an der landwirtschaftlichen Maschine (10) angebracht ist, und eine Höhenverstellung auf Basis eines erfassten Auflagedruckd und/oder einer erfassten Arbeitstiefe erfolgt.

Fig. 1A

Fig. 1B

EP 4 541 172 A2

*Fig. 2*

Fig. 3A

Fig. 3B

EP 4 541 172 A2

Fig. 4

EP 4 541 172 A2

**IN DER BESCHREIBUNG AUFGEFÜHRTE DOKUMENTE**

**In der Beschreibung aufgeführte Patentdokumente**

- EP 2353354 A1